(19) Europäisches Patentamt
European Patent Office
Office européen des brevets

(11) EP 3 467 058 B1

(12) EUROPEAN PATENT SPECIFICATION

(45) Date of publication and mention of the grant of the patent:
**21.02.2024 Bulletin 2024/08**

(21) Application number: **17806584.3**

(22) Date of filing: **29.05.2017**

(51) International Patent Classification (IPC):
***C09D 183/04*** (2006.01) ***B05D 5/00*** (2006.01)
***B05D 7/14*** (2006.01) ***B05D 7/24*** (2006.01)
***B32B 27/00*** (2006.01) ***B32B 27/38*** (2006.01)
***B32B 27/40*** (2006.01) ***C08F 220/28*** (2006.01)
***C09D 5/16*** (2006.01) ***C09D 133/14*** (2006.01)
***C09D 133/24*** (2006.01) ***C09D 133/08*** (2006.01)
***C09D 133/12*** (2006.01) ***C09D 133/26*** (2006.01)
***C09D 135/08*** (2006.01) ***C09D 139/06*** (2006.01)

(52) Cooperative Patent Classification (CPC):
(C-Sets available)
**C09D 5/1668; B05D 5/00; B05D 7/14; B05D 7/24; B32B 27/38; B32B 27/40; C08F 220/281; C09D 4/06; C09D 5/1675; C09D 5/1693; C09D 139/06; C09D 183/08;** C08F 220/1818; C08F 220/287; C08F 230/08; (Cont.)

(86) International application number:
**PCT/JP2017/019854**

(87) International publication number:
**WO 2017/209029 (07.12.2017 Gazette 2017/49)**

(54) **ANTIFOULING COATING COMPOSITION, ANTIFOULING COATING FILM, LAMINATED ANTIFOULING COATING FILM, BASE MEMBER PROVIDED WITH ANTIFOULING COATING FILM AND METHOD FOR PRODUCING SAME, AND ANTIFOULING METHOD**

FÄULNISVERHINDERNDE BESCHICHTUNGSZUSAMMENSETZUNG, FÄULNISVERHINDERNDER BESCHICHTUNGSFILM, LAMINIERTER FÄULNISVERHINDERNDER BESCHICHTUNGSFILM, MIT FÄULNISVERHINDERNDEM BESCHICHTUNGSFILM VERSEHENES BASISELEMENT UND VERFAHREN ZUR HERSTELLUNG DAVON UND FÄULNISVERHINDERUNGSVERFAHREN

COMPOSITION DE REVÊTEMENT ANTISALISSURE, FILM DE REVÊTEMENT ANTISALISSURE, FILM DE REVÊTEMENT ANTISALISSURE STRATIFIÉ, ÉLÉMENT DE BASE POURVU D'UN FILM DE REVÊTEMENT ANTISALISSURE ET PROCÉDÉ POUR SA PRODUCTION ET PROCÉDÉ ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2016 JP 2016110007**

(43) Date of publication of application:
**10.04.2019 Bulletin 2019/15**

(73) Proprietor: **Chugoku Marine Paints, Ltd.**
**Hiroshima 739-0652 (JP)**

(72) Inventors:
- **TANINO, Soichiro**
**Otake-shi**
**Hiroshima 739-0652 (JP)**
- **IKADAI, Junnai**
**Otake-shi**
**Hiroshima 739-0652 (JP)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(74) Representative: **Hoffmann Eitle**
**Patent- und Rechtsanwälte PartmbB**
**Arabellastraße 30**
**81925 München (DE)**

(56) References cited:
**EP-A1- 2 921 538** **EP-A1- 3 564 331**
**JP-A- H1 088 065** **JP-A- S6 452 677**
**JP-A- H01 252 677** **JP-A- H01 306 479**
**JP-A- H01 306 479** **JP-A- H03 255 169**
**JP-A- S60 170 673** **JP-A- 2000 007 995**
**JP-A- 2000 167 993** **JP-A- 2004 059 813**
**JP-A- 2005 298 237** **JP-B2- H0 619 070**

(52) Cooperative Patent Classification (CPC): (Cont.)
C08G 77/26

C-Sets
**C09D 4/06, C08F 265/06;**
**C09D 183/08, C08L 83/00, C08L 83/00,**
**C08L 33/14, C08L 33/08, C08K 3/36, C08K 5/544;**
C08F 220/1804, C08F 220/20;
C08F 220/1804, C08F 220/281, C08F 220/285;
C08F 220/1804, C08F 220/285;
C08F 220/1804, C08F 220/286;
C08F 220/1804, C08F 220/287;
C08F 220/1804, C08F 220/58;
C08F 220/1804, C08F 226/10;
C08F 220/1818, C08F 220/286, C08F 230/08;
C08F 230/08, C08F 220/281;
C08F 230/08, C08F 220/285;
C08F 230/08, C08F 220/286

## Description

Technical Field

The present invention relates to an antifouling coating composition; and an antifouling coating film, a laminated antifouling coating film, a substrate with an antifouling coating film and a method for producing the substrate, and an antifouling method, each using the composition.

Background Art

A curable organopolysiloxane antifouling coating film has been widely used for preventing adhesion of aquatic organisms to ships, underwater structures, fishing nets, fishing gears, and the like. The organopolysiloxane antifouling coating film has excellent advantages that adhesion and establishment of macroorganisms, such as barnacles and mussels, can be prevented through such characteristics thereof as the low surface free energy, the low elastic modulus, and the like, and furthermore the environmental load thereof is lower than the ordinary antifouling coating film, such as a hydration decomposition type and a hydrolysis type, emitting the coating film components to the environment. On the other hand, the antifouling performance thereof against microorganisms, such as slimes, which are biofilms of secreted from bacteria, is insufficient, and various investigations have been made for solving the problem.

For example, PTL 1 proposes a fouling control paint containing a binder containing a polysiloxane as a base material, a hydrophilic-modified polysiloxane having a polysiloxane main chain modified with a hydrophilic oligomer, and a biocide.

PTL 2 describes an antifouling coating agent comprising a reaction-curable silicone rubber and a polymer of at least one monomer A of the following formula:

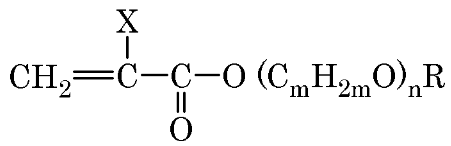

wherein X is H or $CH_3$, R is H, an alkyl or an acyl, m is a number of 2 to 4, and $n \geq 1$, and/or a copolymer of at least one monomer A and a vinyl-polymerizable monomer B copolymerizable therewith, e.g., (meth)acrylate.

PTL 3 describes a non-toxic antifouling coating composition produced by mixing 100 wt.% (solid basis) of a reaction-curable silicone rubber with 1-50 wt.% of a water-repellent organic compound and 0.1-35 wt.% of an acrylic copolymer resin containing a hydrolyzable silyl group and expressed by one of the following formulae:

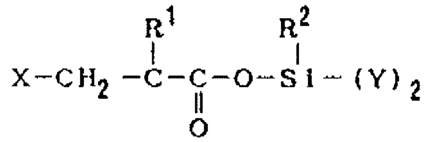

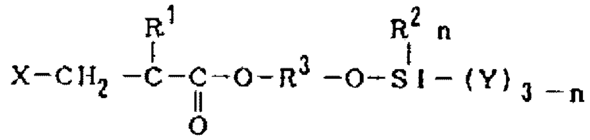

wherein $R^1$ is H or methyl; $R^2$ is alkyl, vinyl or phenyl; $R^3$ is alkylene; X is copolymer produced by polymerizing a (meth)acrylic acid alkyl ester or a vinyl-type organic monomer; Y is hydrolyzable group; and n is 1 or 3.

Citation List

Patent Literature

PTL 1: JP 2013-515122 T

PTL 2: JP H01-252677 A
PTL 3: JP H01-306479 A

## Summary of Invention

### Technical Problem

The coating film formed with the fouling control paint containing a hydrophilic-modified polysiloxane described in PTL 1 has a problem that when the coating film is exposed to a water flow, the hydrophilic-modified polysiloxane is dissolved out from the coating film in a relatively early stage to lose the effect thereof. Furthermore, there is also a problem that the coating film tends to cause adhesion failure to a substrate or an underlying coating film as the underlying material, and the coating film placed under a highly loaded condition, such as under a dynamic water flow, is easily peeled.

An object of the present invention is to provide an antifouling coating composition capable of forming an antifouling coating film that exhibits an antifouling performance against fouling with microorganisms for a prolonged period of time even under an environment where the coating film is exposed to a dynamic water flow, and has good adhesiveness to the underlying material. Another object of the present invention is to provide an antifouling coating film formed with the antifouling coating composition, a laminated antifouling coating film, a substrate with an antifouling coating film and a method for producing the same, and an antifouling method.

### Solution to Problem

As a result of earnest investigations made by the present inventors in view of the aforementioned problems, it has been found that a coating film formed with a coating composition containing a curable organopolysiloxane and a polymer obtained through polymerization of an unsaturated monomer having a particular structure and optionally the other unsaturated monomer exhibits a high antifouling performance for a prolonged period of time under a dynamic water flow and good adhesiveness to an underlying material, and thus the present invention has been completed.

The gist of the present invention is as follows.

The present invention relates to an antifouling coating composition, an antifouling coating film, a laminated antifouling coating film, a substrate with an antifouling coating film, a method for producing the substrate and an antifouling method as defined in the appended claims.

### Advantageous Effects of Invention

According to the present invention, an antifouling coating composition capable of forming an antifouling coating film that exhibits an antifouling performance against fouling with microorganisms for a prolonged period of time even under an environment where the coating film is exposed to a dynamic water flow, and has good adhesiveness to the underlying material can be provided. According to the present invention, furthermore, an antifouling coating film formed with the antifouling coating composition, a laminated antifouling coating film, a substrate with an antifouling coating film and a method for producing the same, and an antifouling method can be provided.

## Description of Embodiments

The antifouling coating composition, the antifouling coating film, the laminated antifouling coating film, the substrate with an antifouling coating film and the method for producing the same, and the antifouling method according to the present invention will be described in detail below.

### [Antifouling Coating Composition]

The antifouling coating composition (which may be hereinafter referred simply to as a "coating composition") of the present invention contains a curable organopolysiloxane (A) and the polymer (B) described later.

According to the present invention, an antifouling coating composition capable of forming an antifouling coating film that exhibits an antifouling performance against fouling with microorganisms for a prolonged period of time even under an environment where the coating film is exposed to a dynamic water flow, and has good adhesiveness to the underlying material is provided.

As described in PTL 1, in the case where the organopolysiloxane obtained through hydrophilic modification to a curable organopolysiloxane is used, the antifouling coating film thus formed has an enhanced antifouling performance against fouling with microorganisms, but the antifouling performance cannot be retained for a prolonged period of time since the hydrophilic-modified organopolysiloxane is dissolved out from the coating film in a relatively early stage, or the

coating film is peeled due to the insufficient adhesiveness to the underlying material. In the antifouling coating composition of the present invention, it has been found that the aforementioned problems are solved by the use of the polymer (B) containing a constituent unit derived from at least one selected from the group consisting of a particular unsaturated monomer containing an ether bond (b1), a tetrahydrofurfuryl (meth)acrylate (b2), a 4-(meth)acryloylmorpholine (b3), and a vinylpyrrolidone (b4).

While the functional mechanism of the aforementioned effects is not necessarily clear, it can be estimated as follows. Specifically, it is estimated that a coating film formed with the curable organopolysiloxane (A) is originally hydrophobic, but the polymer (B) having a constituent unit derived from the particular hydrophilic unsaturated monomers (b1) to (b4) is introduced thereto to enhance the hydrophilicity of the coating film, i.e., to strengthen the interaction of the coating film with water, and thereby fouling with aquatic organisms, particularly microorganisms, can be suppressed. Furthermore, such a mechanism is also estimated that a part of the polymer (B) is eluted, through partial hydrolysis thereof in some cases, to the surface of the coating film and thereby imparts slippage against aquatic organisms to the surface of the coating film.

<Curable Organopolysiloxane (A)>

The antifouling coating composition of the present invention contains a curable organopolysiloxane for enhancing the antifouling performance of the coating film.

Examples of the curable organopolysiloxane (A) used in the present invention include ones that are cured by forming a three-dimensional crosslinked structure through the reaction among the reactive groups contained in the molecule thereof or the reaction between the reactive group contained therein and the reactive group of the organosilicon crosslinking agent (G) described later. Examples of the reaction of the reactive group include condensation reaction and addition reaction, and examples of the condensation reaction include dealcoholization reaction, deoximation reaction, and deacetonation reaction.

The curable organopolysiloxane (A) having the reactive group is preferably one that forms silicone rubber in curing, and for example, a compound represented by the following formula (A1) is preferred.

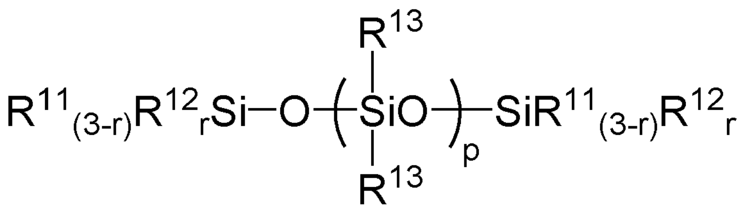

(A1)

In the formula (A1), $R^{11}$ and $R^{13}$ each independently represent a hydrogen atom, an alkyl group, an alkenyl group, an aryl group, an aralkyl group, or a halogenated alkyl group, each having 1 to 16 carbon atoms; $R^{12}$ each independently represent a hydroxy group or a hydrolyzable group; r represents an integer of 1 to 3; and p represents from 10 to 10,000.

In the formula (A1), $R^{11}$ and $R^{13}$ each independently represent a hydrogen atom, an alkyl group, an aryl group, an aralkyl group, alkoxy group, or a halogenated alkyl group, each having from 1 to 16 carbon atoms.

The alkyl group represented by $R^{11}$ and $R^{13}$ has 1 to 16 carbon atoms, and examples thereof include a methyl group, an ethyl group, a propyl group, a butyl group, a pentyl group, a hexyl group, and a heptyl group.

The alkenyl group represented by $R^{11}$ and $R^{13}$ has 2 to 16 carbon atoms, and examples thereof include a vinyl group, an allyl group, a propenyl group, an isopropenyl group, a butenyl group, an isobutenyl group, a pentenyl group, a heptenyl group, a hexenyl group, and a cyclohexenyl group.

The aryl group represented by $R^{11}$ and $R^{13}$ has 6 to 16 carbon atoms, and may have a substituent, such as an alkyl group, on the aromatic ring thereof, and examples thereof include a phenyl group, a tolyl group (i.e., a methylphenyl group), a xylyl group (i.e., a dimethylphenyl group), and a naphthyl group.

The aralkyl group represented by $R^{11}$ and $R^{13}$ has 7 to 16 carbon atoms, and examples thereof include a benzyl group, a 2-phenylethyl group, a 2-naphthylethyl group, and a diphenylmethyl group.

The halogenated alkyl group represented by $R^{11}$ and $R^{13}$ has 1 to 16 carbon atoms, and examples thereof include the groups exemplified above for the alkyl group, in which the hydrogen atoms thereof are partially or completely substituted by a halogen atom, such as a fluorine atom, a chlorine atom, a bromine atom, and an iodine atom.

Among these, $R^{11}$ in the formula (A1) preferably represents a hydrogen atom, an alkyl group, an alkenyl group, or an aryl group, more preferably a methyl group, an ethyl group, a vinyl group, or a phenyl group, and further preferably a methyl group or a vinyl group.

$R^{13}$ in the formula (A1) preferably represents a hydrogen atom, an alkyl group, an alkenyl group, or an aryl

group, more preferably a methyl group, an ethyl group, a vinyl group, or a phenyl group, further preferably a methyl group, an ethyl group, or a phenyl group, and still further preferably a methyl group or a phenyl group.

The plural groups represented by $R^{13}$ may be the same as or different from each other. In the case where there are plural groups represented by $R^{11}$, the groups may be the same as or different from each other.

In the formula (A1), $R^{12}$ each independently represent a hydroxy group or a hydrolyzable group.

Examples of the hydrolyzable group represented by $R^{12}$ include an oxime group, an acyloxy group, an alkoxy group, an alkenyloxy group, an amino group, an amide group, and an aminooxy group.

The oxime group represented by $R^{12}$ is preferably an oxime group having 1 to 10 carbon atoms in total, and examples thereof include a dimethyl ketoxime group, a methyl ethyl ketoxime group, a diethyl ketoxime group, and a methyl isopropyl ketoxime group.

The acyloxy group (RC(=O)O-) represented by $R^{12}$ is preferably an aliphatic acyloxy group having 1 to 10 carbon atoms in total or an aromatic acyloxy group having 7 to 12 carbon atoms in total, and examples thereof include an acetoxy group, a propionyloxy group, a butyryloxy group, and a benzoyloxy group.

The alkoxy group represented by $R^{12}$ is preferably an alkoxy group having 1 to 10 carbon atoms in total. In the alkoxy group represented by $R^{12}$, one or more oxygen atoms may intervene between one or more carbon atoms.

Specific examples of the alkoxy group represented by $R^{12}$ include a methoxy group, an ethoxy group, a propoxy group, a butoxy group, a methoxyethoxy group, and an ethoxyethoxy group.

The alkenyloxy group represented by $R^{12}$ is preferably an alkenyloxy group having 3 to 10 carbon atoms, and examples thereof include an isopropenyloxy group, an isobutenyloxy group, and a 1-ethyl-2-methylvinyloxy group.

The amino group represented by $R^{12}$ is preferably an amino group having 1 to 10 carbon atoms, and examples thereof include an N-methylamino group, an N-ethylamino group, an N-propylamino group, an N-butylamino group, an N,N-dimethylamino group, an N,N-diethylamino group, and a cyclohexylamino group.

The amide group represented by $R^{12}$ is preferably an amide group having 2 to 10 carbon atoms, and examples thereof include an N-methylacetamide group, an N-ethylacetamide group, and an N-methylbenzamide group.

The aminooxy group represented by $R^{12}$ is preferably an aminooxy group having 2 to 10 carbon atoms, and examples thereof include an N,N-dimethylaminooxy group and an N,N-diethylaminooxy group.

Among these, $R^{12}$ in the formula (A1) preferably represents a hydroxy group, an oxime group, or an alkoxy group, more preferably a hydroxy group or an oxime group, and further preferably a hydroxy group or a 2-methyl ethyl ketoxime group.

The plural groups represented by $R^{12}$ may be the same as or different from each other.

In the formula (A1), r represents an integer of 1 to 3.

In the case where the $R^{12}$ is a hydroxy group, r preferably represents 1, and in the case where $R^{12}$ is a substituent other than a hydroxy group, r preferably represents 2.

In the formula (A1), p represents 10 to 10,000, and preferably 100 to 1,000, and may be appropriately controlled to satisfy the following weight average molecular weight.
p means the average repeating number of $-(SiR^{13}_2-O)-$.

The weight average molecular weight (Mw) of the curable organopolysiloxane (A) is preferably 500 or more, more preferably 5,000 or more, further preferably 10,000 or more, still further preferably 15,000 or more, and still more further preferably 20,000 or more, and is preferably 1,000,000 or less, more preferably 100,000 or less, further preferably 50,000 or less, and still further preferably 40,000 or less, from the standpoint of the enhancement of the workability in the production of the coating composition, and the standpoint of the enhancement of the spraying atomization performance and the curability of the coating composition and the strength of the formed coating film.

In the present invention, the "weight average molecular weight (Mw)" and the "number average molecular weight (Mn)" described later of the curable organopolysiloxane (A), the polymer (B) described later, and the like are obtained by measuring by GPC (gel permeation chromatography) and calculating by conversion with the standard polystyrene having known molecular weights.

The viscosity at 23°C of the curable organopolysiloxane (A) is preferably 20 mPa·s or more, more preferably 100 mPa·s or more, and further preferably 500 mPa·s or more, and is preferably 100,000 mPa·s or less, more preferably 10,000 mPa·s or less, and further preferably 5,000 mPa·s or less, from the standpoint of the enhancement of the workability in the production of the coating composition, and the standpoint of the enhancement of the spraying atomization performance and the curability of the coating composition and the strength of the formed coating film.

In the description herein, the viscosity at 23°C of the curable organopolysiloxane (A) means a viscosity measured with a B-type rotary viscometer (for example, Model BM, produced by Tokyo Keiki, Inc.).

The content of the curable organopolysiloxane (A) in the coating composition is preferably 10% by mass or more, more preferably 20% by mass or more, and further preferably 30% by mass or more, and is preferably 90% by mass or less, more preferably 80% by mass or less, and further preferably 70% by mass or less, from the standpoint of the enhancement of the strength of the coating film.

The content of the curable organopolysiloxane (A) in the solid content of the antifouling coating composition is

preferably 15% by mass or more, more preferably 25% by mass or more, and further preferably 35% by mass or more, and is preferably 95% by mass or less, more preferably 85% by mass or less, and further preferably 75% by mass or less.

In the description herein, the "solid content of the coating composition" means the component except for the organic solvent (K) described later and the volatile components contained in the components as a solvent, and the "content in the solid content of the coating composition" can be calculated as a content in a solid content obtained by drying the coating composition in a hot air dryer at 125°C for 1 hour.

The curable organopolysiloxane (A) used may be a commercially available product. Examples of the commercially available product include "DMS-S35", produced by Gelest, Inc., and "KE-445", produced by Shin-Etsu Chemical Co., Ltd. The curable organopolysiloxane (A) used may be one described in JP 2001-139816 A.

<Polymer (B)>

The antifouling coating composition of the present invention contains a polymer (B) containing a constituent unit derived from at least one selected from the group consisting of an unsaturated monomer (b1) represented by the following formula (I), a tetrahydrofurfuryl (meth)acrylate (b2), a 4-(meth)acryloylmorpholine (b3), and a vinylpyrrolidone (b4), for the purpose of enhancing the antifouling performance of the antifouling coating film.

Among these, in the antifouling coating composition of the present invention, the polymer (B) preferably contains a constituent unit derived from the unsaturated monomer (b1) represented by the following formula (I).

$$H_2C{=}CR^1{-}X{-}\left[(R^2O)_m(R^3O)_n\right]{-}R^4 \qquad (I)$$

In the formula (I), $R^1$ represents a hydrogen atom or a monovalent hydrocarbon group having 1 to 10 carbon atoms; $R^2$ represents an ethylene group or a propylene group; $R^3$ represents a divalent hydrocarbon group having 4 to 10 carbon atoms; $R^4$ represents a hydrogen atom or a monovalent hydrocarbon group having 1 to 30 carbon atoms; m represents an integer of 3 to 15; n represents an integer of 0 to 50; and X represents an ester bond, an amide bond, or a single bond.

In the formula (I), $R^1$ represents a hydrogen atom or a monovalent hydrocarbon group having 1 to 10 carbon atoms, examples of the monovalent hydrocarbon group include an alkyl group, such as a methyl group and an ethyl group; an alkenyl group, such as an ethylene group and a propylene group; an aryl group, such as a phenyl group; and an aralkyl group, such as a benzyl group, and an alkyl group is preferred. The number of carbon atoms of the monovalent hydrocarbon group is preferably from 1 to 6, more preferably from 1 to 4, and further preferably 1 or 2, and a methyl group is particularly preferred. $R^1$ preferably represents a hydrogen atom or a methyl group, and is more preferably a hydrogen atom.

In the present invention, the "hydrocarbon group" means a group containing only carbon and hydrogen, and groups containing other elements, such as oxygen, sulfur, phosphorus, and nitrogen, are excluded.

In the formula (I), $R^2$ represents an ethylene group or a propylene group. Plural groups represented by $R^2$ may be the same as or different from each other. $R^2$ preferably has at least one ethylene group. $R^2$ more preferably represents an ethylene group.

$R^3$ represents a divalent hydrocarbon group having 4 to 10 carbon atoms, examples of the group include an alkylene group, such as a butylene group; an alkenylene group; and an arylene group, such as a phenylene group, and among these, an alkylene group is preferred, and a butylene group is more preferred. Plural groups represented by $R^3$ may be the same as or different from each other.

$R^4$ represents a hydrogen atom or a monovalent hydrocarbon group having 1 to 30 carbon atoms, examples of the monovalent hydrocarbon group include a straight-chain, branched-chain, or cyclic saturated or unsaturated aliphatic hydrocarbon group and an aromatic hydrocarbon group, more specific examples thereof include a methyl group, an ethyl group, a propyl group, a butyl group, a hexyl group, a cyclohexyl group, a phenyl group, an octyl group, a dodecyl group, an octadecyl group, and a nonylphenyl group, and $R^4$ preferably represents a hydrogen atom or an aliphatic hydrocarbon group, more preferably a hydrogen atom or a methyl group, and further preferably a methyl group.

In the case where $R^4$ represents these substituents, the polymer (B) may exhibit favorable hydrophilicity, and an excellent antifouling performance can be imparted to the resulting coating film. In the case where $R^4$ represents a group containing a hetero atom other than a hydrogen atom and a carbon atom, there may be a case where the antifouling performance is lowered.

In the formula (I), m represents an integer of 3 to 15.

In the formula (I), n represents an integer of 0 to 50, preferably an integer of 0 to 20, and more preferably 0.

In the description herein, the case where two or more different repeating units are described in parallel to each

other in the brackets shows that the repeating units may be repeated in any form or order of a random form, an alternate form, and a block form. Specifically, for example, a formula -[$X_3$-$Y_3$]-(wherein X and Y each represent a repeating unit) may be any of a random form -XXYXYY-, an alternate form -XYXYXY-, and a block form -XXXYYY- or -YYYXXX-.

In the formula (I), X represents an ester bond (-C(=O)O-), an amide bond (-C(=O)NH-), or a single bond, and preferably an ester bond (-C(=O)O-).

In the case where X represents an ester bond or an amide bond, the carbonyl carbon is preferably bonded to the carbon atom bonded to $R^1$.

The unsaturated monomer (b1) is preferably a compound represented by the following formula (II) from the standpoint of the availability, the economic efficiency, and the like.

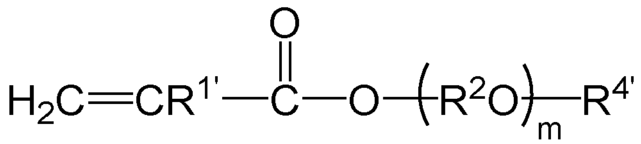

( II )

In the formula (II), $R^{1'}$ represents a hydrogen atom or a methyl group; $R^2$ represents an ethylene group or a propylene group; m represents an integer of 3 to 15; and $R^{4'}$ represents a hydrogen atom or a methyl group.

In the formula (II), $R^{1'}$ represents a hydrogen atom or a methyl group, and preferably a hydrogen atom.

$R^2$ represents an ethylene group or a propylene group. Plural groups represented by $R^2$ may be the same as or different from each other, and at least one of the groups represented by $R^2$ is preferably an ethylene group. $R^2$ more preferably represents an ethylene group.

m represents an integer of 3 to 15.

$R^{4'}$ represents a hydrogen atom or a methyl group. $R^{4'}$ preferably represents a methyl group.

The unsaturated monomer (b1) is preferably a compound represented by the following formula (III).

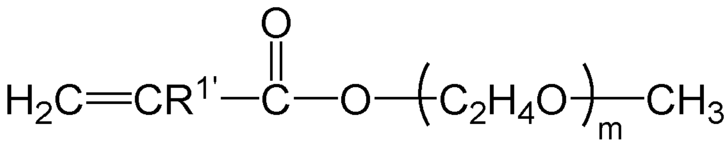

( III )

In the formula (III), $R^{1'}$ represents a hydrogen atom or a methyl group; and m represents an integer of 3 to 15.

In the formula (III), $R^{1'}$ represents a hydrogen atom or a methyl group, and preferably a hydrogen atom.

In the formula (III), m represents an integer of 3 to 15.

Examples of the unsaturated monomer (b1) include polyethylene glycol mono(meth)acrylate, polypropylene glycol mono(meth)acrylate, poly(ethylene glycol-propylene glycol) mono(meth)acrylate, poly(ethylene glycol-butylene glycol) mono(meth)acrylate, methoxypolyethylene glycol mono(meth)acrylate, allyloxypoly(ethylene glycol-propylene glycol) mono(meth)acrylate, phenoxypolyethylene glycol-polypropylene glycol methacrylate, octoxypoly(ethylene glycol-propylene glycol) mono(meth)acrylate, dodecyloxypolyethylene glycol mono(meth)acrylate, octadecyloxypolyethylene glycol mono(meth)acrylate, nonylphenoxypolypropylene glycol acrylate, and ethylene glycol monoallyl ether, a preferred examples thereof is methoxypolyethylene glycol mono(meth)acrylate.

In the description herein, the expression "(meth)acrylate" means "acrylate or methacrylate", and the other similar expressions also have the similar meanings.

The unsaturated monomer (b1) used may be a commercially available product, and examples thereof include NK Ester AM-90G (methoxypolyethylene glycol #400 acrylate), NK Ester AM-130G (methoxypolyethylene glycol #550 acrylate), NK Ester M-90G (methoxypolyethylene glycol #400 methacrylate), and NK Ester M-230G (methoxypolyethylene glycol #1000 methacrylate), all produced by Shin-Nakamura Chemical Co., Ltd.; Light Acrylate MTG-A (methoxytriethylene glycol acrylate), Light Ester 041MA (methoxypolyethylene glycol methacrylate), produced by Kyoeisha Chemical Co., Ltd.; Blemmer ANP-300 (nonylphenoxypolypropylene glycol acrylate), Blemmer AP-400 (polypropylene glycol monoacrylate), Blemmer 70PEP-350B (polyethylene glycol polypropylene glycol monomethacrylate), Blemmer 55PET-800 (polyethylene glycol tetramethylene glycol monomethacrylate), and Blemmer 50POEP-800B (octoxypolyethylene glycol polypropylene glycol methacrylate), all produced by NOF Corporation; and Viscoat #MTG (methoxypolyethylene glycol acrylate), produced by Osaka Organic Chemical Industry, Ltd.

As the tetrahydrofurfuryl (meth)acrylate (b2), any compound that has a tetrahydrofurfuryl (meth)acrylate structure can be used with no particular limitation. Specifically, the tetrahydrofurfuryl (meth)acrylate (b2) may be a compound having one or more arbitrary substituents on the oxolane ring of tetrahydrofurfuryl (meth)acrylate. Examples of the substituent include an alkyl group having 1 to 6 carbon atoms, a halogenated alkyl group having 1 to 6 carbon atoms,

an aryl group having 6 to 14 carbon atoms, an acyl group having 1 to 7 carbon atoms, a halogen atom, and a hydroxy group.

The tetrahydrofurfuryl (meth)acrylate (b2) is preferably tetrahydrofurfuryl acrylate or tetrahydrofurfuryl methacrylate, and more preferably tetrahydrofurfuryl acrylate.

As the 4-(meth)acryloylmorpholine (b3), any compound that has a 4-(meth)acryloylmorpholine structure can be used with no particular limitation. Specifically, the 4-(meth)acryloylmorpholine (b3) may be a compound having one or more arbitrary substituents on the morpholine ring of 4-(meth)acryloylmorpholine. Examples of the substituent include an alkyl group having 1 to 6 carbon atoms, a halogenated alkyl group having 1 to 6 carbon atoms, an aryl group having 6 to 14 carbon atoms, an acyl group having 1 to 7 carbon atoms, a halogen atom, and a hydroxy group.

The 4-(meth)acryloylmorpholine (b3) is preferably 4-acryloylmorpholine or 4-methacryloylmorpholine, and more preferably 4-acryloylmorpholine.

As the vinylpyrrolidone (b4), any compound that has a vinylpyrrolidone structure can be used with no particular limitation. Specifically, the vinylpyrrolidone (b4) may be a compound having one or more arbitrary substituents on the pyrrolidine ring. Examples of the substituent include an alkyl group having 1 to 6 carbon atoms, a halogenated alkyl group having 1 to 6 carbon atoms, an aryl group having 6 to 14 carbon atoms, an acyl group having 1 to 7 carbon atoms, a halogen atom, and a hydroxy group.

Examples of the vinylpyrrolidone (b4) include 1-vinyl-2-pyrrolidone, and also include 3-acetyl-1-vinylpyrrolidin-2-one and 3-benzoyl-1-vinylpyrrolidin-2-one. Among these, the vinylpyrrolidone (b4) is preferably 1-vinyl-2-pyrrolidone (which may also be referred to as N-vinyl-2-pyrrolidone).

In the polymer (B), the content of the constituent unit derived from at least one selected from the group consisting of the unsaturated monomer (b1), the tetrahydrofurfuryl (meth)acrylate (b2), the 4-(meth)acryloylmorpholine (b3), and the vinylpyrrolidone (b4) is preferably from 1 to 100% by mass, more preferably from 3 to 80% by mass, further preferably from 5 to 70% by mass, and still further preferably from 10 to 50% by mass.

The content (mass) of the constituent unit derived from at least one selected from the group consisting of the unsaturated monomer (b1), the tetrahydrofurfuryl (meth)acrylate (b2), the 4-(meth)acryloylmorpholine (b3), and the vinylpyrrolidone (b4) in the polymer (B) can be assumed to be the same as the charged amount (mass) of the monomers (b1) to (b4) used for the polymerization reaction.

In the present invention, the polymer (B) may be a homopolymer containing a constituent unit derived from one kind of the unsaturated monomer (b1), the tetrahydrofurfuryl (meth)acrylate (b2), the 4-(meth)acryloylmorpholine (b3), or the vinylpyrrolidone (b4), or a copolymer containing constituent units derived from two or more kinds selected from the group consisting of the unsaturated monomer (b1), the tetrahydrofurfuryl (meth)acrylate (b2), the 4-(meth)acryloylmorpholine (b3), and the vinylpyrrolidone (b4).

In the present invention, the polymer (B) is preferably a copolymer containing a constituent unit derived from at least one selected from the group consisting of the unsaturated monomer (b1), the tetrahydrofurfuryl (meth)acrylate (b2), the 4-(meth)acryloylmorpholine (b3), and the vinylpyrrolidone (b4), and depending on necessity, a constituent unit derived from at least one of the other unsaturated monomer (b5).

The other unsaturated monomer (b5) preferably contains an unsaturated monomer (b51) represented by the following formula (IV).

$$H_2C{=}CR^{41}{-}X{-}R^{42} \qquad (IV)$$

In the formula (IV), $R^{41}$ represents a hydrogen atom or a monovalent hydrocarbon group having 1 to 10 carbon atoms; $R^{42}$ represents a hydrogen atom or a monovalent hydrocarbon group having 1 to 50 carbon atoms; and X represents an ester bond, an amide bond, or a single bond.

In the formula (IV), $R^{41}$ represents a hydrogen atom or a monovalent hydrocarbon group having 1 to 10 carbon atoms, examples of the group include the groups exemplified above for $R^1$ in the formula (I), and $R^{41}$ preferably represents a hydrogen atom or an alkyl group, more preferably a hydrogen atom or a methyl group, and further preferably a hydrogen atom.

In the formula (IV), $R^{42}$ represents a hydrogen atom or a monovalent hydrocarbon group having 1 to 50 carbon atoms, examples of the group include a straight-chain or branched-chain hydrocarbon group, such as a methyl group, an ethyl group, a propyl group, a butyl group, a pentyl group, a hexyl group, an octyl group, a dodecyl group, and an octadecyl group, and a cyclic hydrocarbon group, such as a cyclohexyl group, a phenyl group, or a benzyl group, and $R^{42}$ preferably represents a n-butyl group, an isobutyl group, or a 2-ethylhexyl group.

In the formula (IV), X represents an ester bond (-C(=O)O-), an amide bond (-C(=O)NH-), or a single bond, and an ester bond is preferred among these.

In the case where X represents an ester bond or an amide bond, the carbonyl carbon is preferably bonded to the carbon atom bonded to $R^{41}$.

Examples of the unsaturated monomer (b51) include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, n-pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, isostearyl (meth)acrylate, phenyl (meth)acrylate, and benzyl (meth)acrylate, and n-butyl (meth)acrylate, isobutyl (meth)acrylate, or 2-ethylhexyl (meth)acrylate is preferably contained.

The other unsaturated monomer (b5) preferably contains an organopolysiloxane group-containing unsaturated monomer (b52).

The organopolysiloxane group-containing unsaturated monomer (b52) used may be a commercially available product, and examples thereof include Silaplane TM-0701T (tris(trimethylsiloxy)silylpropyl methacrylate), Silaplane FM-0711 (methacrylic group-containing dimethylpolysiloxane, number average molecular weight: 1,000), and Silaplane FM-0721 (methacrylic group-containing dimethylpolysiloxane, number average molecular weight: 5,000), all produced by JNC Corporation.

In the case where the other unsaturated monomer (b5) contains the organopolysiloxane group-containing unsaturated monomer (b52), the antifouling performance of the formed antifouling coating film can be enhanced, but since the adhesiveness of the coating film to the underlying material may be lowered in some cases, it is necessary to control appropriately depending on the kind of the underlying material, on which the antifouling coating film is provided.

In the case where the polymer (B) contains a constituent unit derived from the other monomer (b5), the content thereof is preferably 99% by mass or less, more preferably 97% by mass or less, further preferably 95% by mass or less, and still further preferably 90% by mass or less, and is preferably 20% by mass or more, more preferably 30% by mass or more, and further preferably 50% by mass or more.

In the present invention, the weight average molecular weight (Mw) of the polymer (B) is 7,000 or more, and is 30,000 or less from the standpoint of the antifouling performance of the antifouling coating film to be formed and the viscosity thereof.

The weight average molecular weight (Mw) of the polymer (B) that is in the range is preferred since the formed coating film can be imparted with a good antifouling performance.

The content of the polymer (B) in the antifouling coating composition is preferably 0.1% by mass or more, more preferably 0.5% by mass or more, and further preferably 2% by mass or more, and is preferably 50% by mass or less, more preferably 25% by mass or less, and further preferably 10% by mass or less, from the standpoint of the enhancement of the antifouling performance of the antifouling coating film formed with the coating composition, and the standpoint of the retention of the strength thereof.

The content of the polymer (B) in the solid content of the antifouling coating composition is preferably 0.2% by mass or more, more preferably 1% by mass or more, and further preferably 4% by mass or more, and is preferably 80% by mass or less, more preferably 50% by mass or less, and further preferably 20% by mass or less, from the standpoint of the enhancement of the antifouling performance of the antifouling coating film formed with the coating composition, and the standpoint of the retention of the strength thereof.

In the present invention, the polymer (B) may be used alone or as a combination of two or more kinds thereof.

<Optional Ingredients>

The antifouling coating composition of the present invention may contain, in addition to the curable organopolysiloxane (A) and the polymer (B), an inorganic filler (C), a silane coupling agent (D), a silicone oil (E), an antifouling agent (F), an organosilicon crosslinking agent (G), a curing catalyst (H), a dehydrating agent (I), a coloring pigment (J), an organic solvent (K), an anti-sagging and anti-settling agent (L), an enzyme (M), a flame retardant (N), a thermal conductivity improver (O), and the like, depending on necessity.

[Inorganic Filler (C)]

The antifouling coating composition of the present invention may contain an inorganic filler (C) for the purpose of enhancing the flowability and the thixotropy of the coating composition.

In the case where the antifouling coating composition of the present invention contains an inorganic filler (C), the flowability and the thixotropy of the coating composition may be improved, and a coating film having a sufficient thickness can be formed in a small number of coating operations even on a vertical coating surface. Furthermore, the resulting coating film may be improved in properties thereof including hardness, tensile strength, and elongation, in a well balanced manner.

Examples of the inorganic filler (C) include silica, mica, calcium carbonate, aluminum carbonate, magnesium carbonate, barium carbonate, aluminum oxide, titanium oxide, aluminum hydroxide, aluminum silicate, magnesium silicate, potassium feldspar, zinc oxide, kaolin, alumina white, barium sulfate, calcium sulfate, zinc sulfate, and glass

short fibers. The inorganic filler may be used alone or as a combination of two or more kinds thereof.

Among these, the inorganic filler (C) is preferably silica from the standpoint of the enhancement of the properties thereof including the hardness, the tensile strength, and the elongation, in a well balanced manner.

The silica used may be hydrophilic silica (surface-non-treated silica), such as wet method silica (hydrated silica) and dry method silica (fumed silica and anhydrous silica). The silica used may also be hydrophobic silica obtained by subjecting the aforementioned silica to a hydrophobic treatment, such as hydrophobic wet method silica and hydrophobic fumed silica. The silica may be used alone or as a combination of two or more kinds thereof.

The wet method silica is not particularly limited, and for example, wet method silica having an adsorbed water content of 4 to 8% by mass, a bulk density of 200 to 300 g/L, a primary particle diameter of 10 to 30 μm, and a specific surface area (BET surface area) of 10 $m^2/g$ or more is preferred.

The dry method silica is not particularly limited, and for example, dry method silica having a water content of 1.5% by mass or less, a bulk density of 50 to 100 g/L, a primary particle diameter of 8 to 20 μm, and a specific surface area of 10 $m^2/g$ or more is preferred.

The hydrophobic fumed silica includes ones obtained by subjecting dry method silica to a surface treatment with an organosilicon compound, such as methyltrichlorosilane, dimethyldichlorosilane, hexamethyldisilazane, hexamethylcyclotrisiloxane, and octamethylcyclotetrasiloxane. The hydrophobic fumed silica undergoes less water adsorption with the lapse of time, and the water content thereof is preferably 0.3% by mass or less, and more preferably from 0.1 to 0.2% by mass.

The hydrophobic fumed silica is not particularly limited, and for example, hydrophobic fumed silica having a primary particle diameter of 5 to 50 nm, a bulk density of 50 to 100 g/L, and a specific surface area of 10 $m^2/g$ or more is preferred. In the case where the hydrophobic fumed silica is subjected to the heat treatment described later, water adsorbed on the surface of the hydrophobic fumed silica after the heat treatment may be decreased in some cases. In this case, the water content of the hydrophobic fumed silica is preferably 0.2% by mass or less, more preferably 0.1% by mass or less, and further preferably from 0.05 to 0.1% by mass.

The silica used may be a commercially available product. Examples of the commercially available product include "Aerosil R974", "Aerosil RX200", and "Aerosil 200", all produced by Nippon Aerosil Co., Ltd. The silica used may be the material described in JP 2001-139816 A.

The silica may be a heat-treated material obtained by performing a heat treatment together with the curable organopolysiloxane (A) in advance. By performing a heat treatment of silica and a part or the whole of the curable organopolysiloxane (A), the affinity of these components may be enhanced to provide such effects as the suppression of aggregation of the silica.

Examples of the method for performing the heat treatment of the silica and the curable organopolysiloxane (A) include a method of performing a heat treatment under atmospheric pressure or reduced pressure, at a temperature of preferably 100°C or more and the decomposition temperature of the blended component or less, more preferably from 100 to 300°C, and further preferably from 140 to 200°C, for a period of preferably from 3 to 30 hours.

The silica may be blended in the coating composition in the form of a kneaded product obtained by kneading with the curable organopolysiloxane (A). The use of the kneaded product obtained by kneading the silica with the curable organopolysiloxane (A) may suppress the excessive increase of the viscosity of the coating composition.

Examples of the method for producing the kneaded product of the silica and the curable organopolysiloxane (A) include the method described in JP 2004-182908 A.

In the case where the coating composition of the present invention contains the inorganic filler (C), the amount of the inorganic filler (C) per 100 parts by mass of the curable organopolysiloxane (A) is preferably 0.5 part by mass or more, more preferably 1 part by mass or more, further preferably 2 parts by mass or more, still further preferably 3 parts by mass or more, still more further preferably 4 parts by mass or more, still more further preferably 5 parts by mass or more, still more further preferably 6 parts by mass or more, and still more further preferably 7 parts by mass or more, from the standpoint of the enhancement of the thixotropy of the coating composition, and the standpoint of the enhancement of the strength of the coating film and the hardness of the coating film, and is preferably 100 parts by mass or less, more preferably 50 parts by mass or less, and further preferably 20 parts by mass or less, from the standpoint of the suppression of the excessive increase of the viscosity of the coating composition.

[Silane Coupling Agent (D)]

The antifouling coating composition of the present invention may contain a silane coupling agent (D) for the purpose of enhancing the adhesiveness to the underlying material.

The silane coupling agent (D) used is preferably, for example, a compound represented by the following formula (D1).

$$(R^{21}O)_wR^{22}_{(3-w)}Si—R^{23}—Z \qquad (D1)$$

In the formula (D1), $R^{21}$ and $R^{22}$ each independently represent an alkyl group, an alkenyl group, an aryl group, or a halogenated alkyl group, each having 1 to 10 carbon atoms, and a methyl group and an ethyl group are preferred.

In the formula (D 1), $R^{23}$ represents a divalent hydrocarbon group having 1 to 20 carbon atoms, which may have intervening therein an amino group (-NR-, wherein R represents a hydrogen atom or a hydrocarbon group having 1 to 10 carbon atoms), an ether group (-O-), a thioether group (-S-), an ester group (-C(=O)-O-), or an amide group (-C(=O)-NR-, wherein R represents a hydrogen atom or a hydrocarbon group having 1 to 10 carbon atoms), and preferably an alkylene group having 4 to 11 carbon atoms having intervening therein an amino group.

In the formula (D1), Z represents a polar group, preferably an amino group, an imino group, a glycidyl group, an isocyanato group, a thiol group, a hydrosilyl group, or a (meth)acryl group, and more preferably an amino group.

In the formula (D1), w represents an integer of 2 or 3, and preferably 3.

Examples of the silane coupling agent (D) include 3-(2-aminoethyl)aminopropyltrimethoxysilane, 3-aminopropyltrimethoxysilane, 3 - aminopropyltriethoxysilane, 3-(2-(2-aminoethyl)aminoethyl)aminopropyltrimethoxysilane, 3-glycidoxypropyltrimethoxysilane, 3-isocyanatopropyltrimethoxysilane, 3-mercaptopropyltrimethoxysilane, and N-phenyl-3-aminopropyltrimethoxysilane, and partial condensates of these compounds may also be used.

The silane coupling agent (D) may be used alone or as a combination of two or more kinds thereof.

In the case where the antifouling coating composition of the present invention contains the silane coupling agent (D), the content of the silane coupling agent (D) in the solid content of the coating composition is preferably from 0.01 to 10% by mass, and more preferably from 0.05 to 2% by mass, from the standpoint of the enhancement of the adhesiveness of the formed antifouling coating film to the substrate or the underlying coating film.

[Silicone Oil (E)]

The antifouling coating composition of the present invention may contain a silicone oil (E) for the purpose of enhancing the antifouling performance of the formed antifouling coating film.

The silicone oil (E) is preferably a silicone oil represented by the following formula (E1).

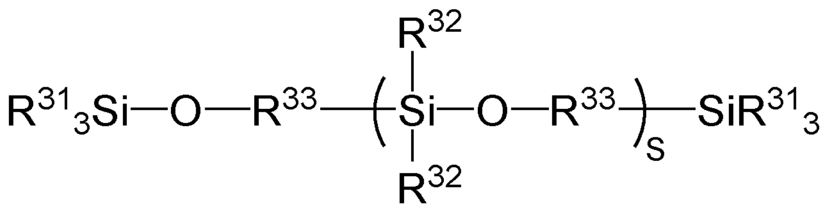

( E1 )

In the formula (E1), $R^{31}$ and $R^{32}$ each independently represent a hydrogen atom, or an alkyl group, an alkenyl group, an aryl group, an aralkyl group, or a halogenated alkyl group, each of which have 1 to 50 carbon atoms, and may have a hetero atom in the structure thereof; $R^{33}$ represents a single bond, or a divalent hydrocarbon group, which has 1 to 50 carbon atoms, and may have intervening therein an amino group, an ether group, a thioether group, an ester group, or an amide group; and s represents an integer of 10 to 1,000.

In the formula (E1), in the case where $R^{31}$ and $R^{32}$ each represent an alkyl group, an alkenyl group, an aryl group, an aralkyl group, or a halogenated alkyl group, each of which have 1 to 50 carbon atoms, these groups each independently may be a group having a hetero atom in the structure thereof, i.e., a group containing a group having a hetero atom in the structure thereof. Examples of the hetero atom include oxygen, nitrogen, and sulfur, and examples of the group having a hetero atom include an amino group, an amide group, an ether group, an ester group, an alcohol group, a carboxy group, a thioether group, and a thiol group.

The plural groups represented by $R^{31}$ and $R^{32}$ may be the same as or different from each other.

The silicone oil (E) is preferably a silicone oil, in which $R^{31}$ and $R^{32}$ are constituted only by an alkyl group, or constituted by an alkyl group and an aryl group.

The silicone oil (E), in which $R^{31}$ and $R^{32}$ are constituted only by an alkyl group, is preferably a silicone oil, in which the plural groups represented by $R^{31}$ and $R^{32}$ are all constituted by methyl groups (which may be hereinafter referred to as a "polydimethylsiloxane (unmodified)"), or are constituted by a methyl group and the other alkyl group, and the other alkyl group is preferably an alkyl group having an ether group. Examples of the other alkyl group having an ether group include a group having a structure represented by $-R(C_2H_4O)_a(C_3H_6O)_bR'$, wherein R represents an alkylene group having 1 to 20 carbon atoms; R' represents an alkyl group having 1 to 20 carbon atoms; and a and b

each represent an integer of 0 to 30, provided that a+b is an integer of 1 or more. In the following description, the silicone oil (E), in which $R^{31}$ and $R^{32}$ are constituted by a methyl group and an alkyl group having an ether group, may be referred to as an "ether-modified polydimethylsiloxane".

The silicone oil (E), in which $R^{31}$ and $R^{32}$ are constituted by an alkyl group and an aryl group, is preferably a silicone oil, in which $R^{31}$ and $R^{32}$ are constituted by a methyl group and a phenyl group (which may be hereinafter referred to as a "phenyl-modified polydimethylsiloxane"), and more preferably a silicone oil having a ratio of a phenyl group occupied in all $R^{31}$ and $R^{32}$ (i.e., a phenyl modification rate) of 3 to 50%.

In the formula (E1), $R^{33}$ represents a single bond, or a divalent hydrocarbon group, which has from 1 to 50 carbon atoms, and may have intervening therein an amino group, an ether group, a thioether group, an ester group, or an amide group.

The plural groups represented by $R^{33}$ may be the same as or different from each other.

$R^{33}$ preferably represents a single bond. In the case where $R^{33}$ represents a divalent hydrocarbon group, which has from 1 to 50 carbon atoms and has intervening therein an ether group, examples thereof include a group having a chemical structure represented by $-R(C_2H_4O)_a(C_3H_sO)_bR''-$, wherein R and R" each independently represent an alkylene group having 1 to 10 carbon atoms; and a and b each represent an integer of 0 to 30, provided that a+b is an integer of 1 or more.

The viscosity at 23°C of the silicone oil (E) is preferably 10 mPa·s or more, more preferably 20 mPa·s or more, further preferably 40 mPa·s or more, still further preferably 60 mPa·s or more, and still more further preferably 80 mPa·s or more, and preferably 10,000 mPa·s or less, more preferably 5,000 mPa·s or less, and further preferably 4,000 mPa·s or less, from the standpoint of the enhancement of the workability in the production of the coaitng composition, and the standpoint of the enhancement of the spraying atomization performance and the curability of the coating composition and the strength of the formed coating film.

In the description herein, the viscosity at 23°C of the silicone oil (E) means a viscosity measured with a B-type rotary viscometer.

In the antifouling coating composition of the present invention, the silicone oil (E) may be used alone or as a combination of two or more kinds thereof.

In the case where the antifouling coating composition of the present invention contains the silicone oil (E), the content of the silicone oil (E) in the solid content of the coating composition is preferably 0.1% by mass or more, more preferably 1% by mass or more, and further preferably 3% by mass or more, and is preferably 50% by mass or less, more preferably 40% by mass or less, and further preferably 30% by mass or less, from the standpoint of the enhancement of the antifouling performance of the formed antifouling coating film.

The silicone oil (E) used may be a commercially available product. Examples of the commercially available product include "KF-96-1,000 cs" (produced by Shin-Etsu Chemical Co., Ltd.) for the polydimethylsiloxane (unmodified), "KF-50-1,000 cs" (produced by Shin-Etsu Chemical Co., Ltd., phenyl modification rate: 5%, kinetic viscosity (25°C): 1,000 $mm^2/s$) for the phenyl-modified polydimethylsiloxane, and "X-22-4272 (produced by Shin-Etsu Chemical Co., Ltd., an ether-modified polydimethylsiloxane, in which a part of $R^{31}$ is an alkyl group having an ether group), "KF-6020" (produced by Shin-Etsu Chemical Co., Ltd., an ether-modified polydimethylsiloxane, in which a part of $R^{32}$ is an alkyl group having an ether group, kinetic viscosity (25°C): 180 $mm^2/s$), "FZ-2203" (produced by Dow Corning Toray Co., Ltd., a polydimethylsiloxane, in which a part of $R^{33}$ is an alkylene group having an ether group), and "FZ-2160" (produced by Dow Corning Toray Co., Ltd., a polydimethylsiloxane, in which a part of $R^{32}$ is a propylene group having an ether group) for the ether-modified polydimethylsiloxane.

[Antifouling Agent (F)]

The antifouling coating composition of the present invention may contain an antifouling agent (F) for the purpose of enhancing the antifouling performance of the formed antifouling coating film.

Examples of the antifouling agent (F) include cuprous oxide, copper thiocyanate, copper, copper pyrithione, zinc pyrithione, 4-bromo-2-(4-chlorophenyl)-5-(trifluoromethyl)-1H-pyrrole-3-carbonitrile (trivial name: tralopyril), 4,5-dichloro-2-n-octyl-4-isothiazolin-3-one, a boran-nitride base adduct (such as pyridine triphenylborane and 4-isopropylpyridine diphenylmethyl borane), (+/-)-4-[1-(2,3-dimethylphenyl)ethyl]-1H-imidazole (trivial name: medetomidine), N,N-dimethyl-N'-(3,4-dichlorophenyl)urea, N-(2,4,6-trichlorophenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylenebisdithiocarbamate, chloromethyl-n-octyl disulfide, N,N-dimethyl-N'-phenyl-(N'-fluorodichloromethylthio)sulfamide, tetraalkylthiuram disulfide, zinc dimethyl dithiocarbamate, zinc ethylene bisdithiocarbamate, 2,3-dichloro-N-(2',6'-diethylphenyl)maleimide, and 2,3-dichloro-N-(2'-ethyl-6'-methylphenyl)maleimide. The antifouling agent may be used alone or as a combination of two or more kinds thereof.

Among these, cuprous oxide, copper thiocyanate, copper, copper pyrithione, zinc pyrithione, tralopyril, 4,5-dichloro-2-n-octyl-4-isothiazolin-3-one, and a boran-nitride base adduct (such as pyridine triphenylborane and 4-isopropylpyridine diphenylmethyl borane) are preferred, and copper pyrithione is more preferred from the standpoint of the storage stability and the curability of the antifouling coating composition and that the antifouling coating film to be formed is excellent in the antifouling performance.

In the case where the antifouling coating composition of the present invention contains the antifouling agent (F), the content of the antifouling agent (F) in the solid content of the coating composition is preferably from 0.05 to 50% by mass, and more preferably from 1 to 30% by mass, from the standpoint of the enhancement of the antifouling performance of the formed antifouling coating film.

[Organosilicon Crosslinking Agent (G)]

The antifouling coating composition of the present invention may contain an organosilicon crosslinking agent (G) for the purpose of enhancing the curability of the antifouling coating film and the strength of the coating film.

The organosilicon crosslinking agent (G) is preferably a compound represented by the following formula (G1) and/or a partial condensate thereof.

$$R^{51}{}_{d}SiY_{(4-d)} \qquad (G1)$$

In the formula (G1), $R^{51}$ represents a hydrocarbon group having 1 to 6 carbon atoms; Y independently represent a hydrolyzable group; and d represents an integer of 0 to 2.

In the formula (G1), $R^{51}$ each independently represent a hydrocarbon group having 1 to 6 carbon atoms, and examples thereof include a straight-chain or branched-chain alkyl group, such as a methyl group, an ethyl group, and a propyl group, a cyclic alkyl group, such as a cyclohexyl group, an alkenyl group, such as a vinyl group, and an aryl group, such as a phenyl group. Among these, a methyl group and an ethyl group are preferred.

In the case where d represents 2, the plural groups represented by $R^{51}$ may be the same as or different from each other.

In the formula (G1), Y independently represent a hydrolyzable group, and examples of the hydrolyzable group include the hydrolyzable groups exemplified for the formula (A1). Among these, an alkoxy group and an oxime group are preferred, an alkoxy group is more preferred, and a methoxy group and an ethoxy group are further preferred.

d represents an integer of 0 to 2, and preferably represents 0 from the standpoint of the enhancement of the curability of the antifouling coating film and the strength of the coating film.

The organosilicon crosslinking agent (G) used may be a commercially available product. As the commercially available product, examples of the tetraethyl orthosilicate include "Ethyl Silicate 28", produced by Colcoat Co., Ltd., and "Ethyl Orthosilicate", produced by Tama Chemicals Co., Ltd. Examples of the partial condensate of the tetraethyl orthosilicate include "Silicate 40", produced by Tama Chemicals Co., Ltd., and "Wacker Silicate TES 40 WN", produced by Asahi Kasei Wacker Silicone Co., Ltd. Examples of the alkyltrialkoxysilane include "KBM-13", produced by Shin-Etsu Chemical Co., Ltd.

In the case where the antifouling coating composition of the present invention contains the organosilicon crosslinking agent (G), the content of the organosilicon crosslinking agent (G) in the solid content of the coating composition is preferably from 0.2 to 20% by mass, and more preferably from 0.4 to 10% by mass, from the standpoint of the control of the curing rate of the formed coating film, and the standpoint of the enhancement of the strength of the coating film.

[Curing Catalyst (H)]

The antifouling coating composition of the present invention may contain a curing catalyst (H) for the purpose of enhancing the curing rate of the formed coating film and enhancing the strength of the coating film.

Examples of the curing catalyst (H) include the curing catalyst described in JP 4-106156 A.

Specific examples thereof include:

a tin carboxylate compound, such as tin naphthenate and tin oleate;

a tin compound, such as dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin laurate) oxide, dibutylbis(triethoxysiloxy) tin, bis(dibutyltin acetate) oxide, dibutyltin bis(ethyl maleate), and octyltin bis(ethyl maleate);

a titanate ester compound and a titanium chelate compound, such as tetraisopropoxy titanium, tetra-N-butoxy titanium, tetrakis(2-ethylhexyloxy) titanium, dipropoxy bis(acetylacetonato) titanium, and titanium isopropoxy octyl glycol;

an organic metal compound, such as zinc naphthenate, zinc stearate, zinc 2-ethyloctoate, iron 2-ethylhexanoate,

cobalt 2-ethylhexanoate, manganese 2-ethylhexanoate, cobalt naphthenate, and an alkoxy aluminum compound; and

a lower fatty acid salt of an alkali metal, such as potassium acetate, sodium acetate, and lithium oxalate.

The curing catalyst (H) used may be a commercially available product. Examples thereof include "Neostan U-100", produced by Nitto Kasei Co., Ltd.

In the case where the antifouling coating composition of the present invention contains the curing catalyst (H), the content of the curing catalyst (H) in the solid content of the coating composition is preferably 0.001% by mass or more, and more preferably 0.01% by mass or more, and is preferably 10% by mass or less, and more preferably 1% by mass or less, from the standpoint of the enhancement of the curing rate of the formed coating film, and the standpoint of the good balance with respect to the pot life after preparing the coating composition.

[Dehydrating Agent (I)]

The antifouling coating composition of the present invention may contain a dehydrating agent (I) for the purpose of enhancing the storage stability of the coating composition.

Examples of the dehydrating agent (I) used include zeolite, which has been known as a generic name "molecular sieve", porous alumina, an ortho ester, such as an alkyl orthoformate, orthoboric acid, and an isocyanate. The dehydrating agent may be used solely or as a combination of two or more kinds thereof.

In the case where the antifouling coating composition of the present invention contains the dehydrating agent (I), the content of the dehydrating agent (I) in the solid content of the coating composition is preferably 0.1% by mass or more, and more preferably 0.5% by mass or more, and is preferably 10% by mass or less, and less preferably 5% by mass or less, from the standpoint of the enhancement of the storage stability of the coating composition.

[Coloring Pigment (J)]

The antifouling coating composition of the present invention may contain a coloring pigment (J) for the purpose of enhancing the design property and the visibility of the coating composition and the coating film thereof.

Examples of the coloring pigment (J) include an inorganic coloring pigment, such as carbon black, red ocher (red iron oxide), titanium white (titanium oxide), and yellow iron oxide, and an organic coloring pigment, such as naphthol red and phthalocyanine blue. The coloring pigment may further contain various colorants, such as a dye. The coloring pigment may be used alone or as a combination of two or more kinds thereof.

In the case where the antifouling coating composition of the present invention contains the coloring pigment (J), the content of the coloring pigment (J) in the solid content of the coating composition is preferably from 0.5 to 20% by mass.

[Organic Solvent (K)]

The antifouling coating composition of the present invention may contain an organic solvent (K) for the purpose of the enhancement of the coating workability by retaining the low viscosity of the coating composition and enhancing the spraying atomization performance of the coating composition.

Examples of the organic solvent (K) include an aromatic hydrocarbon organic solvent, an aliphatic hydrocarbon organic solvent, an alicyclic hydrocarbon organic solvent, a ketone organic solvent, and an ester organic solvent, and among these, an aromatic hydrocarbon organic solvent and a ketone organic solvent are preferred.

Examples of the aromatic hydrocarbon organic solvent include toluene, xylene, and mesitylene.

Examples of the aliphatic hydrocarbon organic solvent include pentane, hexane, heptane, and octane.

Examples of the alicyclic hydrocarbon organic solvent include cyclohexane, methylcyclohexane, and ethylcyclohexane.

Examples of the ketone organic solvent include acetylacetone, acetone, methyl ethyl ketone, methyl isobutyl ketone, and dimethyl carbonate.

Examples of the ester organic solvent include propylene glycol monomethyl ether acetate.

The organic solvent (K) may be used alone or as a combination of two or more kinds thereof.

In the case where the antifouling coating composition of the present invention contains the organic solvent (K), the content of the organic solvent (K) in the coating composition may be appropriately controlled corresponding to the viscosity of the coating composition, is preferably 1% by mass or more, more preferably 10% by mass or more, further preferably 20% by mass or more, and still further preferably 25% by mass or more, and from the standpoint of the prevention of the sagging in coating, is preferably 70% by mass or less, and more preferably 40% by mass or less.

[Anti-sagging and Anti-settling Agent (L)]

The antifouling coating composition of the present invention may contain an anti-sagging and anti-settling agent (L).
Examples of the anti-settling agent (L) include organoclay wax (such as a stearate salt, a lecithin salt, and an alkyl sulfonate and the like of Al, Ca, and Zn), organic wax (such as polyethylene wax, oxidized polyethylene wax, amide wax, polyamide wax, and hydrogenated castor oil wax), and a mixture of organoclay wax and organic wax.
The anti-sagging and anti-settling agent (L) used may be a commercially available product. Examples of the commercially available product include "Disparlon 305", "Disparlon 4200-20", and "Disparlon A630-20X", all produced by Kusumoto Chemicals, Ltd.
In the case where the antifouling coating composition of the present invention contains the anti-sagging and anti-settling agent (L), the content of the anti-sagging and anti-settling agent (L) in the solid content of the coating composition is preferably from 0.01 to 10% by mass, and more preferably from 0.1 to 3% by mass.

[Enzyme (M)]

The antifouling coating composition of the present invention may contain an enzyme (M) for the purpose of enhancing the antifouling performance of the formed antifouling coating film.
Examples of the enzyme (M) include serine protease, cysteine protease, metalloproteinase, cellulase, hemicellulase, pectinase, and glycosidase.
In the case where the antifouling coating composition of the present invention contains the enzyme (M), the content of the enzyme in the solid content of the coating composition is preferably from 0.0005 to 5% by mass, and more preferably from 0.01 to 0.1% by mass.

[Flame Retardant (N)]

The antifouling coating composition of the present invention may contain a flame retardant (N). Examples of the flame retardant (N) include antimony oxide and oxidized paraffin.
In the case where the antifouling coating composition of the present invention contains the flame retardant (N), the content of the flame retardant in the solid content of the coating composition is preferably from 0.01 to 20% by mass, and more preferably from 0.1 to 1% by mass.

[Thermal Conductivity Improver (O)]

The antifouling coating composition of the present invention may contain a thermal conductivity improver (O). Examples of the thermal conductivity improver (O) include boron nitride and aluminum oxide.
In the case where the antifouling coating composition of the present invention contains the thermal conductivity improver (O), the content of the thermal conductivity improver in the solid content of the coating composition is preferably from 0.01 to 20% by mass, and more preferably from 0.1 to 1% by mass.

<Kit of Coating Composition>

The antifouling coating composition of the present invention may be formed as a one-pack type coating material composed of a single component, or may also be formed as a multi-pack type coating material composed of two or more components.
In the case of a multi-pack type coating material, it is preferred that the respective components (respective liquids) each contain one or plural components, are individually packed, and then stored and kept in a state of being charged in a container, such as a can, etc., and by mixing the contents of the respective components at the time of coating, the coating composition can be prepared.
In the case of a multi-pack type coating material, it is preferred that the coating material is constituted of two components of a "main agent component" containing the curable organopolysiloxane (A) constituting a main body of the binder resin of the coating composition, and a "curing agent component" containing the organosilicon crosslinking agent (G) or the like forming a crosslinked structure through reaction with the curable organopolysiloxane (A). In consideration of the reactivity, the denaturation and the like of the optional ingredients, a component referred to as an "optional ingredient component (additive component)" may be added. That is, the antifouling coating composition of the present invention may be, for example, a two-pack type coating material constituted of the main agent component and the curing agent component, or may also be a three-pack type coating material constituted of the main agent component, the curing agent component, and the additive component.

[Antifouling Coating Film]

The antifouling coating film of the present invention is one formed by curing the antifouling coating composition of the present invention. For example, the antifouling coating film can be obtained by applying the antifouling coating composition of the present invention on a substrate or the like, and then curing the coating composition.

Examples of the method for applying the antifouling coating composition of the present invention include known methods using a brush, a roller, a spray, and the like.

The antifouling coating composition applied according to the aforementioned method may be cured, for example, by allowing to stand under a condition of 25°C for a period of approximately from 0.5 to 3 days, so as to provide a coating film. The coating composition may be cured while blowing the air under heating.

The thickness of the antifouling coating film of the invention after curing is preferably approximately from 100 to 2,000 μm from the standpoint of the enhancement of the strength of the coating film. Examples of the method for producing the antifouling coating film having the thickness include a method of applying the coating composition once or plural times to a thickness per one time applying of preferably from 30 to 400 μm, and more preferably from 50 to 300 μm.

[Substrate with Antifouling Coating Film and Method for producing Same]

The substrate with an antifouling coating film of the present invention includes a substrate having thereon the antifouling coating film of the present invention or the laminated antifouling coating described later.

The method for producing the substrate with an antifouling coating film is not particularly limited, and the substrate with an antifouling coating film can be obtained, for example, by a production method including: (1) a step of applying the antifouling coating composition of the present invention on a substrate or impregnating a substrate therewith, so as to provide an applied member or an impregnated member; and (2) a step of curing the applied member or the impregnated member.

In the step (1), the method for applying the coating composition on the substrate may be the aforementioned coating method. The method for impregnating is not particularly limited, and may be performed by immersing the substrate in the coating composition in an amount that is sufficient for the impregnation. The method for curing the applied member or the impregnated member is not particularly limited, and the member may be cured in the similar manner as in the production of the antifouling coating film.

The substrate with an antifouling coating film can also be obtained by a method including: (i) a step of curing the antifouling coating composition of the present invention, so as to form a coating film; and (ii) a step of attaching the coating film to a substrate.

In the step (i), the method for forming the coating film is not particularly limited, and the coating film can be produced in the similar method as in the production of the antifouling coating film.

In the step (ii), the method for attaching the coating film to a substrate is not particularly limited, and the coating film can be attached, for example, by the method described in JP 2013-129724 A.

Examples of the substrate include a ship (such as an outer panel of a ship's hull of a large scale steel-hulled ship, such as a container ship, a tanker and the like, a fishing boat, an FRP boat, a wooden boat, a yacht, and the like, and a newly built ship and a repaired ship thereof, a fishing material (such as a rope, a fishing net, a fishing gear, a float, and a buoy), a petroleum pipeline, a water conduit, a water circulation pipe, a diver suit, a swimming goggle, an oxygen cylinder, a swim suit, a torpedo, an underwater structure, such as a feed-water and drainage ports for a heat power or nuclear power plant, a marine cable, a seawater utilization equipment (such as a seawater pump), a mega-float, a coastal road, an undersea tunnel, a seaport equipment, and various marine civil engineering works for a canal, a water channel, and the like.

Among these, the substrate is preferably selected from the group consisting of a ship, an underwater structure, and a fishing gear, is more preferably selected from the group consisting of a ship and an underwater structure, and is further preferably a ship.

[Laminated Antifouling Coating Film]

The laminated antifouling coating film of the present invention includes an underlying coating film (u) having thereon the antifouling coating film of the present invention.

Examples thereof include a case where a certain coating film is formed on a surface of a substrate. Specifically, the laminated antifouling coating film may be formed by applying the antifouling coating composition of the present invention on an underlying coating film (u) formed with an underlying coating composition (U) described later in advance.

Furthermore, the laminated antifouling coating film may be formed by applying the antifouling coating composition of the present invention on a surface treated with any other treating agent, such as a rust inhibitor, or on a surface already applied with the antifouling coating composition of the present invention.

<Underlying Coating Composition (U)>

Examples of the underlying coating composition for the antifouling coating composition of the present invention include a reaction curing resin type and a thermoplastic resin type, and in view of the adhesiveness, a reaction curing resin type is preferred, and a silicone type, an epoxy type, and a polyurethane type are preferred. An epoxy type and a polyurethane type are more preferred since strong adhesiveness to the foundation and a rust inhibiting property are obtained.

The epoxy underlying coating composition (U1) contains an epoxy resin (UA) and a curing agent for an epoxy resin, such as an amine curing agent (UB).

The polyurethane underlying coating composition (U2) contains a polyol resin (UC) and a polyisocyanate (UD).

[Epoxy Underlying Coating Composition (U1)]

Epoxy Resin (UA)

The epoxy resin (UA) is a reaction curing resin that has two or more epoxy groups in one molecule and can be cured through reaction with a curing agent.

Examples of the epoxy resin (UA) include a bisphenol type, a novolac type, and an aliphatic type, and a bisphenol type epoxy resin is preferred from the standpoint of the coating workability and the rust inhibiting property.

The bisphenol type epoxy resin preferably has an epoxy equivalent of from 160 to 500, and more preferably from 180 to 500.

Examples of the bisphenol type epoxy resin include a bisphenol A type epoxy resin and a bisphenol F type epoxy resin, and also include a bisphenol type epoxy resin subjected to a dimer acid modification or a polysulfide modification, and hydrogenated products of these bisphenol type epoxy resins, and among these, a bisphenol A type epoxy resin is preferred.

Examples of the bisphenol A type epoxy resin include a bisphenol A type diglycidyl ether, such as bisphenol A diglycidyl ether, bisphenol A polypropylene oxide diglycidyl ether, bisphenol A ethylene oxide diglycidyl ether, hydrogenated bisphenol A diglycidyl ether, and hydrogenated bisphenol A propylene oxide diglycidyl ether, and examples of the bisphenol F type epoxy resin include a bisphenol F type diglycidyl ether, such as bisphenol F diglycidyl ether.

Examples of the commercially available product of the bisphenol A type epoxy resin include "jER 828" (epoxy equivalent: 184 to 194, viscosity: 12,000 to 15,000 mPa·s at 25°C, the solid content thereof is in a liquid state at ordinary temperature), "jER 834-90X" (epoxy equivalent: 230 to 270, the solid content thereof is in a semi-solid state at ordinary temperature), and "jER 1001-75X" (epoxy equivalent: 450 to 500, the solid content thereof is in a solid state at ordinary temperature), all produced by Mitsubishi Chemical Corporation.

The epoxy resin may be used alone or as a combination of two or more kinds thereof.

Amine Curing Agent (UB)

The amine curing agent (UB) forms a cured product through reaction with the epoxy resin (UA).

The amine curing agent (UB) used is generally a bifunctional or higher functional amine, such as an aliphatic amine, an alicyclic amine, an aromatic amine, and a heterocyclic amine, or a modified product thereof. The epoxy resin coating composition containing the amine curing agent (UB) mixed therein can be cured at ordinary temperature, and is preferred for an application where the coating composition is applied under an ordinary temperature environment.

Examples of the aliphatic amine include diethylenetriamine, dipropylenetriamine, tetraethylenepentamine, bis(cyanoethyl)diethylenetriamine, and bishexamethylenetriamine.

Examples of the alicyclic amine include 4-cyclohexanediamine, 4,4'-methylenebiscyclohexylamine, norbornanediamine (NBDA, 2,5- or 2,6-bis(aminomethyl)-bicyclo[2,2,1]heptane), and isophoronediamine (IPDA, 3-aminomethyl-3,5,5-trimethylcyclohexylamine).

Examples of the aromatic amine include m-xylylenediamine (MXDA), phenylenediamine, 4,4'-diaminobenzophenone, 4,4'-diaminodiphenyl ether, and 4,4'-diaminodiphenylsulfone.

Examples of the heterocyclic amine include N-methylpiperazine.

Examples of the modified product of the amine include a polyamide and a modified product thereof of the amine, an epoxy adduct having an epoxy compound added, and a Mannich modified product, in which an epoxy adduct is preferred from the standpoint of the curability of the coating composition, and a polyamide and a modified product thereof are preferred from the standpoint of the anticorrosion property and the adhesiveness.

The active hydrogen equivalent of the amine curing agent (UB) is preferably from 40 to 1,000 g/eq, and more preferably from 80 to 600 g/eq, from the standpoint of the balance between the curability and the adhesiveness of the coating composition.

As the amine curing agent (UB), specifically, examples of the polyamide include "Luckamide N-153" and "Luckamide TD-966", all produced by DIC Corporation, and "Sunmide 315", produced by Sanwa Chemical Industry Co. Ltd., examples of the epoxy adduct of a polyamide having an epoxy compound added include "PA-23", produced by Ohtake Meishin Chemical Co., Ltd., and examples of the Mannich modified product of a modified polyamide include "ADEKA Hardener EH-350", produced by ADEKA Corporation.

A ketimine type curing agent obtained by modifying the amine compound with a ketone may also be used.

Specific examples of the ketimine type curing agent include "Ancamine MCA", produced by Air Products and Chemicals, Inc., which is a modified alicyclic polyamine.

The amine curing agent (UB) may be used alone or as a combination of two or more kinds thereof.

In the epoxy underlying coating composition (U1), the amine curing agent (UB) is preferably used in such an amount with respect to the epoxy resin (UA) that provides an equivalent ratio of the epoxy component and the amine component (epoxy equivalent/active hydrogen equivalent) of 1/0.25 to 1/0.9, and more preferably 1/0.3 to 1/0.8. The use of the amine curing agent (UB) in such an amount may result in a tendency providing a coating film excellent in drying property, anticorrosion capability, and overcoatability. In other words, the amine curing agent (UB) is preferably used in an amount of 10 to 80 parts by mass, and more preferably 20 to 70 parts by mass, per 100 parts by mass of the epoxy resin in the epoxy resin underlying coating composition (U1).

As the curing agent for the epoxy underlying coating composition (U1), the other curing agent for an epoxy resin than the amine curing agent (UB) may be used, and the amine curing agent (UB) may be used along with the other curing agent for an epoxy resin.

The other curing agent for an epoxy resin is not particularly limited, as far as the epoxy resin (UA) is cured therewith, and examples thereof include curing agent of a carboxylic acid type, an acid anhydride type, and a silanol type, other than the amine curing agent (UB).

[Polyurethane Underlying Coating Composition (U2)]

Polyol Resin (UC)

The polyol resin (UC) is a reaction curing resin that has two or more alcohol groups (hydroxy groups) in one molecule and can be cured through reaction with the polyisocyanate (UD).

Examples of the polyol resin (UC) include a polyester polyol obtained through condensation reaction of at least one of a polyhydric alcohol and at least one of a polyvalent carboxylic acid, and a polyether polyol obtained through addition polymerization of an alkylene oxide with a polyhydric alcohol or an amine as an initiator.

Examples of the polyhydric alcohol used for the condensation reaction of the polyester polyol include ethylene glycol, 1,4-butanediol, neopentyl glycol, 1,6-hexanediol, a polyalkylene glycol, such as diethylene glycol and the like, glycerol, trimethylolpropane (TMP), pentaerythritol, and sorbitol, and examples of the polyvalent carboxylic acid therefor include adipic acid, azelaic acid, sebacic acid, terephthalic acid, isophthalic acid, phthalic acid, and succinic acid.

The hydroxy value of the polyol resin (UC) is preferably from 10 to 200 mgKOH/g, and more preferably from 30 to 100 mgKOH/g, from the standpoint of the curability and the coating workability of the coating composition.

Specific examples of the polyol resin (UC) include "Teslac 2471" (polyester polyol, hydroxy value: 53 to 59 mgKOH/g, number average molecular weight: 2,000) and "Phthalkyd 806" (polyester polyol, hydroxy value: 85 to 90 mgKOH/g), all produced by Hitachi Chemical Co., Ltd., and "Polylite RX-4800" (polyester polyol, hydroxy value: 108 to 116 mgKOH/g), produced by DIC Corporation.

Polyisocyanate (UD)

The polyisocyanate (UD) has a function curing the polyurethane underlying coating composition (U2) by forming polyurethane through reaction with the polyol resin (UC).

The polyisocyanate (UD) used is not particularly limited, as far as it is a compound that can be used in coating compositions of this kind, and specific examples thereof include a diisocyanate compound, such as hexamethylene diisocyanate, xylylene diisocyanate, 1,3-bis(isocyanatomethyl)cyclohexane, tolylene diisocyanate, diphenylmethane diisocyanate, isophorone diisocyanate, and m-xylylene diisocyanate (MXDI), and a triisocyanate compound, such as triphenylmethane triisocyanate.

An adduct compound, a biuret compound, and an isocyanurate compound derived from the aforementioned isocyanate may also be used.

Examples of the polyisocyanate (UD) include "Desmodur L75" (an adduct compound of tolylene diisocyanate and trimethylolpropane, NCO content: 13.2%) and "Coronate HL" (an adduct of hexane diisocyanate and trimethylolpropane), all produced by Sumika Covestro Urethane Co., Ltd.

The content of the polyisocyanate (UD) contained in the polyurethane underlying coating composition (U2) is

such an amount that provides a ratio of the equivalent of the isocyanate group contained in the polyisocyanate and the equivalent of the hydroxy group contained in the polyol (NCO group/OH group) of preferably from 0.3/1.0 to 2.0/1.0, and more preferably from 0.9/1.0 to 1.2/1.0. The ratio of the equivalent of the isocyanate group and the equivalent of the hydroxy group of the polyurethane underlying coating composition (U2) that is in the range is preferred from the standpoint of the long-term anticorrosion property since the water resistance of the formed coating film is enhanced.

The polyisocyanate (UD) may be used along with an imine compound or a tertiary amine compound as a curing accelerator for enhancing the low-temperature curability. Specific examples thereof include imidazole, octylate salt or phenol salt of DBU (1,8-diazabicyclo-(5,4,0)undecene-7) and octylate salt of DBN (1,5-diazabicyclo-(4,3,0)-nonene-5), all produced by San-Apro Ltd., triethylamine, tributylamine, dimethylbenzylamine, diethylethanolamine, triethanolamine, and quinoline.

Other Additives

The epoxy underlying coating composition (U1) and the polyurethane underlying coating composition (U2) may further contain, in addition to the aforementioned components, a thermoplastic resin, such as a vinyl resin, a plasticizer, an inorganic filler, a coloring pigment, a rust inhibitor, an organic solvent, a curing accelerator, an anti-sagging agent, an anti-settling agent, and the like.

[Antifouling Method]

The antifouling method of the present invention includes using the antifouling coating film or the laminated antifouling coating film of the present invention.

The coating film formed by curing the antifouling coating composition of the present invention is excellent in antifouling performance, and the coating film can suppress fouling with aquatic organisms of a substrate applied with the coating film.

Examples

The present invention will be described more specifically with reference to examples below, but the present invention is not limited to the examples.

In the following description, the curable organopolysiloxane (A), the polymer (B), the inorganic filler (silica) (C), and the like may be referred to as a "component (A)", a "component (B)", a "component (C)", and the like, respectively.

[Production of Solution of Polymer (B)]

For a part of the unsaturated monomers used for the production of the polymer (B), the product names, the compound names, and the manufacturers are shown in Table 1.

<Production Example of Solution of Polymer (B 1)>

The reaction was performed under ordinary pressure in a nitrogen atmosphere. 42.86 g of methyl amyl ketone was charged in a reaction vessel equipped with a stirrer, a reflux condenser, a thermometer, a nitrogen introducing tube, and a dropping funnel, and heated to an internal temperature of 100°C under stirring. While retaining the temperature of methyl amyl ketone in the reaction vessel to 100±5°C, a mixture containing 20.0 g of NK Ester AM-130G, 80.0 g of isobutyl acrylate, and 4.0 g of 2,2'-azobis(2-methylbutyronitrile) was added dropwise to the reaction vessel over 4 hours. Thereafter, the reaction mixture was stirred at the temperature range retaining for 2 hours, so as to provide a polymer (B1).

<Production Examples of Solutions of Polymers (B2 to B6, B8 to B26, and B34)>

The components shown in Tables 2 and 3 were mixed at the shown ratios, and the polymerization reaction was performed by the operation under the polymerization condition shown in Production Example of Solution of Polymer (B1) while appropriately controlling the amount of the polymerization initiator, so as to provide solutions of polymers (B2 to B6, B8 to B26, and B34).

<Production Example of Solution of Polymer (B7)>

The reaction was performed under ordinary pressure in a nitrogen atmosphere. 42.86 g of xylene was charged in a reaction vessel equipped with a stirrer, a reflux condenser, a thermometer, a nitrogen introducing tube, and a

dropping funnel, and heated to an internal temperature of 100°C under stirring. While retaining the temperature of xylene in the reaction vessel to 100±5°C, a mixture containing 40.0 g of NK Ester AM-90G, 60.0 g of isobutyl acrylate, and 4.0 g of 2,2'-azobis(2-methylbutyronitrile) was added dropwise to the reaction vessel over 4 hours. Thereafter, the reaction mixture was stirred at the temperature range retaining for 2 hours, so as to provide a polymer (B7).

<Production Example of Solution of Polymer (B27)>

The reaction was performed under ordinary pressure in a nitrogen atmosphere. 42.86 g of methyl amyl ketone was charged in a reaction vessel equipped with a stirrer, a reflux condenser, a thermometer, a nitrogen introducing tube, and a dropping funnel, and heated to an internal temperature of 100°C under stirring. While retaining the temperature of methyl amyl ketone in the reaction vessel to 100±5°C, a mixture containing 30.0 g of NK Ester AM-90G and 4.0 g of 2,2'-azobis(2-methylbutyronitrile), and 70.0 g of Silaplane FM-0711 were added dropwise to the reaction vessel over 4 hours. Thereafter, the reaction mixture was stirred at the temperature range retaining for 2 hours, so as to provide a polymer (B27).

<Production Example of Solutions of Polymers (B28 to B33)>

The components shown in Table 3 were mixed at the shown ratios, and the polymerization reaction was performed by the operation under the polymerization condition shown in Production Example of Solution of Polymer (B27) while appropriately controlling the amount of the polymerization initiator, so as to provide solutions of polymers (B28 to B33).

[Evaluation Method for Polymer and Polymer Solution]

<Solid Content (% by mass) of Solution of Polymer (B)>

1.0 g ($X_1$) of the polymer solution was retained in a thermostat chamber retained under a condition of 1 atm and 108°C for 3 hours, so as to remove the volatile component to provide the non-volatile component. The amount ($X_2$ (g)) of the non-volatile component was measured, and the amount of the solid content contained in the polymer solution was calculated by the following expression.

$$\text{Solid content (\% by mass) of solution of polymer (B)} = X_2/X_1 \times 100$$

<Viscosity of Polymer Solution>

The viscosity (unit: mPa s) of the polymer solution at a liquid temperature of 25°C was measured with an E-type viscometer (TV-25, produced by Toki Sangyo Co., Ltd.).

<Average Molecular Weight of Polymer>

The weight average molecular weight (Mw) and the number average molecular weight (Mn) of the polymer were measured by GPC (gel permeation chromatography) under the following condition.

GPC Condition

Equipment: "HLC-8220GPC" (produced by Tosoh Corporation)
Columns: "TSKgel Super H2000" + "TSK gel Super H4000" (all produced by Tosoh Corporation)
Eluent: tetrahydrofuran (THF)
Flow rate: 0.500 mL/min
Detector: RI
Column thermostat chamber temperature: 40°C
Standard substance: polystyrene
Preparation method of specimen: The polymer solutions prepared in Production Examples each were diluted by adding THF thereto, and then filtered with a membrane filter to provide a filtrate, which was designated as a specimen for the GPC measurement.

Table 1

| | Product name | Name of compound and manufacturer, etc. |
|---|---|---|
| Unsaturated monomer (b1) | NK EsterAM-130G | methoxypolyethylene glycol acrylate (repeating number of polyethylene glycol: 13 in average) produced by Shin-Nakamura Chemical Co., Ltd. |
| | NK EsterAM-90G | methoxypolyethylene glycol acrylate (repeating number of polyethylene glycol: 9 in average) produced by Shin-Nakamura Chemical Co., Ltd. |
| | NK Ester M-90G | methoxypolyethylene glycol methacrylate (repeating number of polyethylene glycol: 9 in average) produced by Shin-Nakamura Chemical Co., Ltd. |
| | Viscoat #MTG | methoxypolyethylene glycol acrylate (repeating number of polyethylene glycol: 3 in average) produced by Osaka Organic Chemical Industry, Ltd. |
| | Blemmer AP-400 | polypropylene glycol monoacrylate (repeating number of polyethylene glycol: 6 in average) produced by NOF Corporation |
| | Blemmer 70PEP-350B | polyethylene glycol polypropylene glycol monomethacrylate (block type, repeating number of polyethylene glycol: 5 in average, repeating number of polypropylene glycol: 2 in average) produced by NOF Corporation |
| | Blemmer 55PET-800 | polyethylene glycol tetramethylene glycol monomethacrylate (random type, repeating number of polyethylene glycol: 10 in average, repeating number of tetramethylene glycol: 5 in average) produced by NOF Corporation |
| | Blemmer 50POEP-800B | octoxypolyethylene glycol polypropylene glycol methacrylate (block type, repeating number of polyethylene glycol: 8 in average, repeating number of polypropylene glycol: 7 in average) produced by NOF Corporation |
| Other unsaturated monomer (b5) | Silaplane FM-0711 | methacryl group-containing dimethylpolysiloxane number average molecular weight: 1,000, produced by JNC Corporation |
| | Silaplane FM-0721 | methacryl group-containing dimethylpolysiloxane number average molecular weight: 5,000, produced by JNC Corporation |
| | Silaplane TM-0701T | tris(trimethylsiloxy)silylpropyl methacrylate produced by JNC Corporation |

The unsaturated monomers used for the polymerization, and the characteristics of the resulting polymers (B) and the solutions thereof are shown in Tables 2 and 3.

Table 2

| | | | Production Example | | | | | | | | | | | | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 |
| | | | (B1) | (B2) | (B3) | (B4) | (B5) | (B6) | (B7) | (B8) | (B9) | (B10) | (B11) | (B12) | (B13) | (B14) | (B15) | (B16) | (B17) |
| Monomer mixture (part by mass) | Unsaturated monomer (b1) | NK Ester AM-130G | 20.0 | | | | | | | | | | | | | | | | |
| | | NK Ester AM-90G | | 5.0 | 10.0 | 20.0 | 30.0 | 30.0 | 40.0 | 50.0 | 100.0 | | | | | | | | |
| | | NK Ester M-90G | | | | | | | | | | 20.0 | | | | | | | |
| | | Viscoat #MTG | | | | | | | | | | | 20.0 | 50.0 | | | | | |
| | | Blemmer AP-400 | | | | | | | | | | | | | 20.0 | | | | |
| | | Blemmer 70PEP-350B | | | | | | | | | | | | | | 20.0 | | | |
| | | Blemmer 55PET-800 | | | | | | | | | | | | | | | 20.0 | | |
| | | Blemmer 50POEP-800B | | | | | | | | | | | | | | | | 20.0 | |
| | | 2-Methoxyethyl acrylate | | | | | | | | | | | | | | | | | 20.0 |
| | | 2-Hydroxyethyl acrylate | | | | | | | | | | | | | | | | | |
| | | 2-Hydroxypropyl acrylate | | | | | | | | | | | | | | | | | |
| | (b2) | Tetrahydrofurfuryl acrylate | | | | | | | | | | | | | | | | | |
| | (b3) | 4-Acryloylmorpholine | | | | | | | | | | | | | | | | | |
| | (b4) | 1-Vinyl-2-pyrrolidone | | | | | | | | | | | | | | | | | |
| | Other unsaturated monomer (b5) (b51) | n-Butyl acrylate | | | | | | 70.0 | | | | | | | | | | | |
| | | Isobutyl acrylate | 80.0 | 95.0 | 90.0 | 80.0 | 70.0 | | 60.0 | 50.0 | | 80.0 | 80.0 | 50.0 | 80.0 | 80.0 | 80.0 | 80.0 | 80.0 |
| | | Isostearyl acrylate | | | | | | | | | | | | | | | | | |
| | (b52) | Silaplane FM-0711 | | | | | | | | | | | | | | | | | |
| | | Silaplane FM-0721 | | | | | | | | | | | | | | | | | |
| | | Silaplane TM-0701T | | | | | | | | | | | | | | | | | |
| | Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Charac-teristics | Solid content (% by mass) | | 69.7 | 69.9 | 69.5 | 69.5 | 69.2 | 69.3 | 70.3 | 69.1 | 69.1 | 70.0 | 70.0 | 70.0 | 69.4 | 69.6 | 69.9 | 69.4 | 70.3 |
| | Viscosity (mPa·s) | | 223 | 238 | 207 | 180 | 157 | 109 | 109 | 227 | 93 | 210 | 214 | 161 | 205 | 249 | 226 | 186 | 292 |
| | Weight average molecular weight (Mw) | | 10,800 | 10,900 | 10,000 | 11,800 | 12,100 | 10,200 | 9,100 | 19,300 | 8,300 | 11,800 | 11,800 | 12,100 | 11,100 | 12,000 | 13,200 | 11,600 | 12,100 |

Table 3

| | | | Production Example | | | | | | | | | | | | | | | | |
|---|---|---|---|---|---|---|---|---|---|---|---|---|---|---|---|---|---|---|---|
| | | | 18 | 19 | 20 | 21 | 22 | 23 | 24 | 25 | 26 | 27 | 28 | 29 | 30 | 31 | 32 | 33 | 34 |
| | | | (B18) | (B19) | (B20) | (B21) | (B22) | (B23) | (B24) | (B25) | (B26) | (B27) | (B28) | (B29) | (B30) | (B31) | (B32) | (B33) | (B34) |
| Monomer mixture (part by mass) | Unsaturated monomer (b1) | NK Ester AM-130G | | | | | | | | | | | | | | | | | |
| | | NK Ester AM-90G | | | | 10.0 | | | | | | 30.0 | 30.0 | 30.0 | | | | 20.0 | |
| | | NK Ester M-90G | | | | | | | | | | | | | | | | | |
| | | Viscoat #MTG | | | | | | | | | | | | | 40.0 | | | | |
| | | Blemmer AP-400 | | | | | | | | | | | | | | | | | |
| | | Blemmer 70PEP-350B | | | | | | | | | | | | | | | | | |
| | | Blemmer 55PET-800 | | | | | | | | | | | | | | | | | |
| | | Blemmer 50POEP-800B | | | | | | | | | | | | | | | | | |
| | | 2-Methoxyethyl acrylate | 30.0 | 50.0 | 100.0 | 10.0 | | | | | | | | | | 40.0 | | | |
| | | 2-Hydroxyethyl acrylate | | | | | 20.0 | | | | | | | | | | | | |
| | | 2-Hydroxypropyl acrylate | | | | | | 20.0 | | | | | | | | | 20.0 | | |
| | (b2) | Tetrahydrofurfuryl acrylate | | | | | | | 30.0 | | | | | | | | | | |
| | (b3) | 4-Acryloylmorpholine | | | | | | | | 30.0 | | | | | | | | | |
| | (b4) | 1-Vinyl-2-pyrrolidone | | | | | | | | | 20.0 | | | | | | | | |
| | Other unsaturated monomer (b5) (b51) | n-Butyl acrylate | | | | | | | | | | | | | | | | | |
| | | Isobutyl acrylate | 70.0 | 50.0 | | 80.0 | 80.0 | 80.0 | 70.0 | 70.0 | 80.0 | | | | | | | | 100.0 |
| | | Isostearyl acrylate | | | | | | | | | | | | | | | | 60.0 | |
| | (b52) | Silaplane FM-0711 | | | | | | | | | | 70.0 | | | 60.0 | 60.0 | 80.0 | 20.0 | |
| | | Silaplane FM-0721 | | | | | | | | | | | 70.0 | | | | | | |
| | | Silaplane TM-0701T | | | | | | | | | | | | 70.0 | | | | | |
| | Total | | 100.0 | 100.0 | 100.0 | 100.0 | 100.0 | 100.0 | 100.0 | 100.0 | 100.0 | 100.0 | 100.0 | 100.0 | | | | 100.0 | 100.0 |
| Charac-teristics | Solid content (% by mass) | | 70.1 | 70.0 | 70.3 | 70.3 | 70.8 | 70.1 | 70.3 | 70.5 | 70.9 | 69.5 | 66.7 | 69.0 | 69.0 | 69.1 | 69.1 | 69.5 | 69.8 |
| | Viscosity (mPa·s) | | 217 | 231 | 227 | 227 | 557 | 441 | 338 | 1480 | 1277 | < 50 | 69 | 75 | < 50 | < 50 | 55 | 71 | 269 |
| | Weight average molecular weight (Mw) | | 9,600 | 9,900 | 10,500 | 10,500 | 10,700 | 9,900 | 11,200 | 10,400 | 11,400 | 9,500 | 12,400 | 9,600 | 11,100 | 10,400 | 13,500 | 9,000 | 10,000 |

[Coating Composition]

Blended Components

The blended components used in the coating compositions are shown in Tables 4 and 5.

The kneaded products of the curable organopolysiloxane (A) and the inorganic filler (silica) (C) shown in Table 4 each were obtained by using the curable organopolysiloxane (A) and the inorganic filler (silica) (C) in the amounts shown in Table 4 and kneading them by a known method.

Table 4

| | | Name of compound | Chemical formula, characteristics, manufacturer, etc. |
|---|---|---|---|
| (A) | Curable organopolysiloxane | silanol group-containing organopolysiloxane | $HO-(Si(CH_3)_2-O-)_n-H$ weight average molecular weight: 28,500 viscosity: 2,100 mPa·s |
| | | oximesilyl group-containing organopolysiloxane (*1) | $(MEKO)_2(CH_2=CH-)SiO-(Si(CH_3)_2-O-),-Si(CH=CH_2)(MEKO)_2$ weight average molecular weight: 35,000 viscosity: 1,500 mPa·s |
| (C) | Silica | untreated silica | Aerosil 200, produced by Nippon Aerosil Co., Ltd. |
| | | hydrophobic treated silica | Aerosil RX200, produced by Nippon Aerosil Co., Ltd. |
| Kneaded product (1) of (A) and (C) | | kneaded product of silanol group-containing organopolysiloxane and hydrophobic treated silica<br>amount of component (C) per 100 parts by mass of component (A): 10 parts by mass viscosity: 5,000 mPa·s | |
| Kneaded product (2) of (A) and (C) | | kneaded product of oximesilyl group-containing organopolysiloxane and untreated silica<br>amount of component (C) per 100 parts by mass of component (A): 10 parts by mass viscosity: 40 Pa·s | |
| Kneaded product (3) of (A) and (C) | | kneaded product of oximesilyl group-containing organopolysiloxane and hydrophobic treated silica<br>amount of component (C) per 100 parts by mass of component (A): 10 parts by mass viscosity: 800 Pa·s | |
| *1: MEKO represents a 2-methyl ethyl ketoxime group. | | | |

Table 5

| | | Name of compound | Chemical formula, characteristics, manufacturer, etc. |
|---|---|---|---|
| (D) | Silane coupling agent | 3-(2-aminoethylamino) propyltrimethoxysilane | KBM-603, produced by Shin-Etsu Chemical Co., Ltd. |
| | | 3-aminopropyl Trimethoxysilane | KBM-903, produced by Shin-Etsu Chemical Co., Ltd. |
| (E) | Silicone oil | ether-modified organopolysiloxane | KF-6020, produced by Shin-Etsu Chemical Co., Ltd. |
| | | phenyl-modified organopolysiloxane | KF-50-1,000cs, produced by Shin-Etsu Chemical Co., Ltd. phenyl modification rate: 5% viscosity: 1,000 mPa·s |
| (F) | Antifouling agent | copper pyrithione | Copper Omadine Powder, produced by Arch UK Biocides Ltd. $Cu(-S-C_5H_4N-O-)_2$ |
| (G) | Organosilicon crosslinking agent | organosilane partial hydrolyzed condensate | Wacker Silicate TES 40 WN, produced by Asahi Kasei Wacker Silicone Co., Ltd. $H_5C_2O-(Si(OC_2H_5)_2-O-)_t-C_2H_5$ |
| (H) | Curing catalyst | dibutyltin dilaurate | Gleck TL, produced by DIC Corporation |
| (J) | Coloring pigment | titanium oxide | Titone R-5N, produced by Sakai Chemical Industry Co., Ltd. |
| | | red iron oxide | Gekko BB, produced by Todakogyo Corporation |

(continued)

| | | Name of compound | Chemical formula, characteristics, manufacturer, etc. |
|---|---|---|---|
| (K) | Organic solvent | xylene | - |
| | | acetylacetone | - |

[Examples 1 to 12, 20 to 40, 44 to 61, 65 to 74 and 77 to 80, Reference Examples 13 to 19, 41 to 43, 62 to 64, 75 and 76, and Comparative Examples 1 to 7]

<Production of Coating Composition>

The components were mixed by stirring according to the blending amounts (part by mass) shown in Tables 6 to 11, so as to provide a one-pack type coating composition constituted only by a main agent component, and a three-pack type coating composition constituted by a main agent component, a curing agent component, and an additive component.

In the case of applying the three-pack type coating composition, the components of the respective components were thoroughly stirred and mixed with a disperser such that the mixture became uniform, and then used.

<Production of Test Plate provided with Coating Film>

On a sand-blasted plate having applied thereon an epoxy anticorrosion paint ("Bannoh 500", produced by Chugoku Marine Paints, Ltd.), the underlying coating composition 1 (epoxy type) formed by mixing the components shown in Table 12 was applied to a thickness after drying (curing) of 100 μm, and dried at ordinary temperature for 6 hours to provide an underlying coating film, which was designated as the underlying coating films of Examples 1 to 12, 20 to 40 and 44 to 48, Reference Examples 13 to 19 and 41 to 43, and Comparative Examples 1 to 4.

On a sand-blasted plate having applied thereon an epoxy anticorrosion paint ("Bannoh 500", produced by Chugoku Marine Paints, Ltd.), the underlying coating composition 2 (polyurethane type) formed by mixing the components shown in Table 12 was applied to a thickness after drying (curing) of 100 μm, and dried at ordinary temperature for 6 hours to provide an underlying coating film, which was designated as the underlying coating films of Examples 49 to 61, 65 to 74, and 77 to 80, Reference Examples 62 to 64, 75 and 76, and Comparative Examples 5 to 7.

Subsequently, the coating compositions of Examples, Reference Examples and Comparative Examples each were applied on the underlying coating film to a thickness after drying (curing) of 200 μm at ordinary temperature. After allowing to stand for one week at ordinary temperature, the test plates provided with a coating film were obtained.

<Evaluation of Antifouling Performance>

The test plate was placed on a side surface of a spinning rotor, which was immersed in the actual ocean off Kure, Hiroshima Prefecture, and made to spin at a rate corresponding to approximately 15 knot. The test plate was placed in such a manner that the test surface sufficiently received sunlight, so as to provide a condition where slimes were liable to form. After 12 months, the ratio of the area of the region having slimes were attached with respect to the surface of the antifouling film of the test plate was evaluated by visual observation. The dynamic antifouling performance was evaluated by the following evaluation point.

(Evaluation Point)

10: No slime was attached.
9: The slime attached area was less than 1% of the total test area.
8: The slime attached area was 1% or more and less than 3% of the total test area.
7: The slime attached area was 3% or more and less than 5% of the total test area.
6: The slime attached area was 5% or more and less than 10% of the total test area.
5: The slime attached area was 10% or more and less than 20% of the total test area.
4: The slime attached area was 20% or more and less than 40% of the total test area.
3: The slime attached area was 40% or more and less than 60% of the total test area.

2: The slime attached area was 60% or more and less than 80% of the total test area.
1: The slime attached area was 80% or more.

<Evaluation of Adhesiveness>

The surface of the coating film of the test plate was cut in a straight line form to reach the underlying coating film with a single blade defined in JIS K5600-5-6, and the surface was rubbed with wiping paper in the direction perpendicular to the cut, at which the extent of occurrence of delamination between the coating film and the underlying coating film was evaluated by the following standard, and was designated as the evaluation point of the adhesiveness (standard).

Separately, the test plate was immersed in marine water at 40°C for 2 months, and then evaluated in the same manner as above, which was designated as the evaluation of the adhesiveness (overload).

(Evaluation Point)

3: The delamination occurred within a range of less than 1 mm from the cut.
2: The delamination occurred within a range of 1 mm or more and less than 3 mm from the cut.
1: The delamination occurred continuously over a range of 3 mm or more from the cut.
0: The coating film had been peeled and did not exist.

Table 6

| | | | Example | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13* | 14* | 15* | 16* |
| Formulation of coating composition (part by mass) | (A) and (C) | Kneaded product (2) of oximesilyl group-containing organopolysiloxane and untreated silica | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 |
| | | Kneaded product (3) of oximesilyl group-containing organopolysiloxane and hydrophobic treated silica | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 |
| | (B) | Polymer (B1) (solid content: 69.7% by mass) | 5.0 | | | | | | | | | | | | | | | |
| | | Polymer (B2) (solid content: 69.9% by mass) | | 5.0 | | | | | | | | | | | | | | |
| | | Polymer (B3) (solid content: 69.5% by mass) | | | 5.0 | | | | | | | | | | | | | |
| | | Polymer (B4) (solid content: 69.5% by mass) | | | | 5.0 | | | | | | | | | | | | |
| | | Polymer (B5) (solid content: 69.2% by mass) | | | | | 5.0 | | | | | | | | | | | |
| | | Polymer (B6) (solid content: 69.3% by mass) | | | | | | 5.0 | | | | | | | | | | |
| | | Polymer (B7) (solid content: 70.3% by mass) | | | | | | | 5.0 | | | | | | | | | |
| | | Polymer (B8) (solid content: 69.1% by mass) | | | | | | | | 5.0 | | | | | | | | |
| | | Polymer (B10) (solid content: 70.0% by mass) | | | | | | | | | 5.0 | | | | | | | |
| | | Polymer (B11) (solid content: 70.0% by mass) | | | | | | | | | | 5.0 | | | | | | |
| | | Polymer (B12) (solid content: 70.0% by mass) | | | | | | | | | | | 5.0 | | | | | |
| | | Polymer (B13) (solid content: 69.4% by mass) | | | | | | | | | | | | 5.0 | | | | |
| | | Polymer (B17) (solid content: 70.3% by mass) | | | | | | | | | | | | | 5.0 | | | |
| | | Polymer (B18) (solid content: 70.1% by mass) | | | | | | | | | | | | | | 5.0 | | |
| | | Polymer (B19) (solid content: 70.0% by mass) | | | | | | | | | | | | | | | 5.0 | |
| | | Polymer (B20) (solid content: 70.3% by mass) | | | | | | | | | | | | | | | | 5.0 |
| | (D) | 3-(2-Aminoethylamino)propyltrimethoxysilane | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | (E) | Phenyl-modified organopolysiloxane | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (G) | Organosilane partial condensate | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | (J) | Titanium oxide | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (K) | Xylene | 26.9 | 26.9 | 26.9 | 26.9 | 26.9 | 26.9 | 26.9 | 26.9 | 26.9 | 26.9 | 26.9 | 26.9 | 26.9 | 26.9 | 26.9 | 26.9 |
| Total (part by mass) | | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Result | Antifouling performance | | 10 | 7 | 10 | 10 | 10 | 10 | 10 | 10 | 10 | 9 | 10 | 8 | 8 | 8 | 8 | 9 |
| | Adhesiveness (standard) | | 3 | 3 | 3 | 3 | 3 | 3 | 3 | 3 | 3 | 3 | 3 | 3 | 3 | 3 | 3 | 3 |
| | Adhesiveness (overload) | | 3 | 3 | 3 | 3 | 3 | 3 | 3 | 3 | 3 | 3 | 3 | 3 | 3 | 3 | 3 | 3 |

* Reference Example (not encompassed by the wording of the claims)

Table 7

| | | | Example | | | | | | | | | | | | | Comparative Example | |
|---|---|---|---|---|---|---|---|---|---|---|---|---|---|---|---|---|---|
| | | | 17* | 18* | 19* | 20 | 21 | 22 | 23 | 24 | 25 | 26 | 27 | 28 | 29 | 1 | 2 |
| Formulation of coating composition (part by mass) | (A) and (C) | Kneaded product (2) of oximesilyl group-containing organopolysiloxane and untreated silica | 40.0 | 40.0 | 40.0 | 40.0 | 40.0 | 40.0 | 40.0 | 40.0 | 40.0 | 40.0 | 40.0 | 40.0 | 40.0 | 40.0 | 40.0 |
| | | Kneaded product (3) of oximesilyl group-containing organopolysiloxane and hydrophobic treated silica | 15.0 | 15.0 | 15.0 | 15.0 | 15.0 | 15.0 | 15.0 | 15.0 | 15.0 | 15.0 | 15.0 | 15.0 | 15.0 | 15.0 | 15.0 |
| | (B) | Polymer (B21) (solid content: 70.3% by mass) | 5.0 | | | | | | | | | | | | | | |
| | | Polymer (B22) (solid content: 70.8% by mass) | | 5.0 | | | | | | | | | | | | | |
| | | Polymer (B23) (solid content: 70.1% by mass) | | | 5.0 | | | | | | | | | | | | |
| | | Polymer (B24) (solid content: 70.3% by mass) | | | | 5.0 | | | | | | | | | | | |
| | | Polymer (B25) (solid content: 70.5% by mass) | | | | | 5.0 | | | | | | | | | | |
| | | Polymer (B26) (solid content: 70.9% by mass) | | | | | | 5.0 | | | | | | | | | |
| | | Polymer (B27) (solid content: 69.5% by mass) | | | | | | | 5.0 | | | | | | | | |
| | | Polymer (B28) (solid content: 66.7% by mass) | | | | | | | | 5.0 | | | | | | | |
| | | Polymer (B29) (solid content: 69.0% by mass) | | | | | | | | | 5.0 | | | | | | |
| | | Polymer (B30) (solid content: 69.0% by mass) | | | | | | | | | | 5.0 | | | | | |
| | | Polymer (B31) (solid content: 69.1% by mass) | | | | | | | | | | | 5.0 | | | | |
| | | Polymer (B32) (solid content: 69.1% by mass) | | | | | | | | | | | | 5.0 | | | |
| | | Polymer (B33) (solid content: 69.5% by mass) | | | | | | | | | | | | | 5.0 | | |
| | | Polymer (B34) (solid content: 69.8% by mass) | | | | | | | | | | | | | | 5.0 | |
| | (D) | 3-(2-Aminoethylamino)propyltrimethoxysilane | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | (E) | Phenyl-modified organopolysiloxane | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (G) | Organosilane partial condensate | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | (J) | Titanium oxide | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (K) | Xylene | 26.9 | 26.9 | 26.9 | 26.9 | 26.9 | 26.9 | 26.9 | 26.9 | 26.9 | 26.9 | 26.9 | 26.9 | 26.9 | 26.9 | 26.9 |
| Total (part by mass) | | | 100.0 | 100.0 | 100.0 | 100.0 | 100.0 | 100.0 | 100.0 | 100.0 | 100.0 | 100.0 | 100.0 | 100.0 | 100.0 | 100.0 | 95.0 |
| Result | Antifouling performance | | 8 | 9 | 9 | 7 | 7 | 7 | 10 | 10 | 9 | 10 | 9 | 10 | 10 | 2 | 1 |
| | Adhesiveness (standard) | | 3 | 3 | 3 | 3 | 3 | 3 | 3 | 3 | 3 | 3 | 3 | 3 | 3 | 3 | 3 |
| | Adhesiveness (overload) | | 3 | 3 | 3 | 3 | 3 | 3 | 2 | 2 | 2 | 2 | 2 | 2 | 2 | 3 | 3 |

* Reference Example (not encompassed by the wording of the claims)

Table 8

| | | | Example | | | | | | | | | | |
|---|---|---|---|---|---|---|---|---|---|---|---|---|---|
| | | | 30 | 31 | 32 | 33 | 34 | 35 | 36 | 37 | 38 | 39 | 40 |
| Formulation of coating composition (part by mass) | (A) and (C) | Kneaded product (2) of oximesilyl group-containing organopolysiloxane and untreated silica | 40.0 | 40.0 | 40.0 | 40.0 | 40.0 | 40.0 | 40.0 | 40.0 | 40.0 | 40.0 | 40.0 |
| | | Kneaded product (3) of oximesilyl group-containing organopolysiloxane and hydrophobic treated silica | 15.0 | 15.0 | 15.0 | 15.0 | 15.0 | 15.0 | 15.0 | 15.0 | 15.0 | 15.0 | 15.0 |
| | (B) | Polymer (B3) (solid content: 69.5% by mass) | | | | | | | | | 5.0 | | |
| | | Polymer (B4) (solid content: 69.5% by mass) | 3.0 | 10.0 | 20.0 | 5.0 | 5.0 | 10.0 | 5.0 | 5.0 | | | |
| | | Polymer (B5) (solid content: 69.2% by mass) | | | | | | | | | | 5.0 | |
| | | Polymer (B8) (solid content: 69.1% by mass) | | | | | | | | | | | 5.0 |
| | (D) | 3-(2-Aminoethylamino)propyltrimethoxysilane | 0.1 | 0.1 | 0.1 | | 0.1 | 0.1 | 0.1 | 0.1 | 0.1 | 0.1 | 0.1 |
| | | 3-Aminopropyltrimethoxysilane | | | | 0.1 | | | | | | | |
| | (E) | Ether-modified organopolysiloxane | | | | | 1.0 | | | 1.0 | | | |
| | | Phenyl-modified organopolysiloxane | 5.0 | 5.0 | 5.0 | 5.0 | 5.0 | | 5.0 | 5.0 | 5.0 | 5.0 | 5.0 |
| | (F) | Copper pyrithione | | | | | | | 5.0 | 5.0 | 5.0 | 5.0 | 5.0 |
| | (G) | Organosilane partial condensate | 3.0 | 3.0 | 3.0 | 3.0 | 3.0 | 3.0 | 3.0 | 3.0 | 3.0 | 3.0 | 3.0 |
| | (J) | Titanium oxide | 5.0 | 5.0 | 5.0 | 5.0 | 5.0 | 5.0 | | | | | |
| | | Red iron oxide | | | | | | | 5.0 | 5.0 | 5.0 | 5.0 | 5.0 |
| | (K) | Xylene | 26.9 | 26.9 | 26.9 | 26.9 | 26.9 | 26.9 | 26.9 | 26.9 | 26.9 | 26.9 | 26.9 |
| Total (part by mass) | | | 98.0 | 105.0 | 115.0 | 100.0 | 101.0 | 100.0 | 105.0 | 106.0 | 105.0 | 105.0 | 105.0 |
| Result | Antifouling performance | | 9 | 10 | 9 | 10 | 10 | 9 | 10 | 10 | 10 | 10 | 10 |
| | Adhesiveness (standard) | | 3 | 3 | 3 | 3 | 3 | 3 | 3 | 3 | 3 | 3 | 3 |
| | Adhesiveness (overload) | | 3 | 3 | 2 | 3 | 3 | 3 | 3 | 3 | 3 | 3 | 3 |

Table 9

| | | | Example | | | | | | | | Comparative Example | |
|---|---|---|---|---|---|---|---|---|---|---|---|---|
| | | | 41* | 42* | 43* | 44 | 45 | 46 | 47 | 48 | 3 | 4 |
| Formulation of coating composition (part by mass) | (A) and (C) | Kneaded product (2) of oximesilyl group-containing organopolysiloxane and untreated silica | 40.0 | 40.0 | 40.0 | 40.0 | 40.0 | 40.0 | 40.0 | 40.0 | 40.0 | 40.0 |
| | | Kneaded product (3) of oximesilyl group-containing organopolysiloxane and hydrophobic treated silica | 15.0 | 15.0 | 15.0 | 15.0 | 15.0 | 15.0 | 15.0 | 15.0 | 15.0 | 15.0 |
| | (B) | Polymer (B19) (solid content: 70.0% by mass) | 5.0 | | | | | | | | | |
| | | Polymer (B17) (solid content: 70.3% by mass) | | 5.0 | | | | | | | | |
| | | Polymer (B18) (solid content: 70.1% by mass) | | | 5.0 | | | | | | | |
| | | Polymer (B25) (solid content: 70.5% by mass) | | | | 5.0 | | | | | | |
| | | Polymer (B26) (solid content: 70.9% by mass) | | | | | 5.0 | | | | | |
| | | Polymer (B27) (solid content: 69.5% by mass) | | | | | | 5.0 | | | | |
| | | Polymer (B28) (solid content: 66.7% by mass) | | | | | | | 5.0 | | | |
| | | Polymer (B33) (solid content: 69.5% by mass) | | | | | | | | 5.0 | | |
| | (D) | 3-(2-Aminoethylamino)propyltrimethoxysilane | 0.1 | 0.1 | 0.1 | 0.1 | 0.1 | 0.1 | 0.1 | 0.1 | 0.1 | 0.1 |
| | (E) | Ether-modified organopolysiloxane | | | | | | | | | 1.0 | |
| | | Phenyl-modified organopolysiloxane | 5.0 | 5.0 | 5.0 | 5.0 | 5.0 | 5.0 | 5.0 | 5.0 | 5.0 | 5.0 |
| | (F) | Copper pyrithione | 5.0 | 5.0 | 5.0 | 5.0 | 5.0 | 5.0 | 5.0 | 5.0 | | 5.0 |
| | (G) | Organosilane partial condensate | 3.0 | 3.0 | 3.0 | 3.0 | 3.0 | 3.0 | 3.0 | 3.0 | 3.0 | 3.0 |
| | (J) | Titanium oxide | | | | | | | | | 5.0 | |
| | | Red iron oxide | 5.0 | 5.0 | 5.0 | 5.0 | 5.0 | 5.0 | 5.0 | 5.0 | | 5.0 |
| | (K) | Xylene | 26.9 | 26.9 | 26.9 | 26.9 | 26.9 | 26.9 | 26.9 | 26.9 | 26.9 | 26.9 |
| Total (part by mass) | | | 105.0 | 105.0 | 105.0 | 105.0 | 105.0 | 105.0 | 105.0 | 105.0 | 96.0 | 100.0 |
| Result | Antifouling performance | | 10 | 10 | 10 | 10 | 10 | 10 | 10 | 10 | 1 | 5 |
| | Adhesiveness (standard) | | 3 | 3 | 3 | 3 | 3 | 3 | 3 | 3 | 3 | 3 |
| | Adhesiveness (overload) | | 3 | 3 | 3 | 3 | 3 | 3 | 2 | 2 | 3 | 3 |

* Reference Example (not encompassed by the wording of the claims)

Table 10

| | | | Example | | | | | | | | | | | | | | | | | |
|---|---|---|---|---|---|---|---|---|---|---|---|---|---|---|---|---|---|---|---|---|
| | | | 49 | 50 | 51 | 52 | 53 | 54 | 55 | 56 | 57 | 58 | 59 | 60 | 61 | 62* | 63* | 64* | 65 | 66 |
| Formulation of coating composition (part by mass) | (A) | Silanol group-containing organopolysiloxane | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 |
| | (A) and (C) | Kneaded product (1) of silanol group-containing organopolysiloxane and hydrophobic treated silica | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| | | Polymer (B3) (solid content: 69.5% by mass) | 5.0 | | | | | | | | 5.0 | | | | | | | | | |
| | | Polymer (B4) (solid content: 69.5% by mass) | | 5.0 | 10.0 | 20.0 | | | | | | | | | | | | | | |
| | | Polymer (B5) (solid content: 69.2% by mass) | | | | | 5.0 | | | | | | | | | | | | | |
| | | Polymer (B6) (solid content: 69.3% by mass) | | | | | | 5.0 | | | | | | | | | | | | |
| | | Polymer (B7) (solid content: 70.3% by mass) | | | | | | | 5.0 | | | | | | | | | | | |
| | | Polymer (B8) (solid content: 69.1% by mass) | | | | | | | | 5.0 | 5.0 | | | | | | | | | |
| | | Polymer (B9) (solid content: 69.1% by mass) | | | | | | | | | | 5.0 | | | | | | | | |
| | | Polymer (B14) (solid content: 69.6% by mass) | | | | | | | | | | | 5.0 | | | | | | | |
| | | Polymer (B15) (solid content: 69.9% by mass) | | | | | | | | | | | | 5.0 | | | | | | |
| | | Polymer (B16) (solid content: 69.4% by mass) | | | | | | | | | | | | | 5.0 | | | | | |
| | | Polymer (B17) (solid content: 70.3% by mass) | | | | | | | | | | | | | | 5.0 | | | | |
| | | Polymer (B18) (solid content: 70.1% by mass) | | | | | | | | | | | | | | | 5.0 | | | |
| | | Polymer (B23) (solid content: 70.1% by mass) | | | | | | | | | | | | | | | | 5.0 | | |
| | | Polymer (B27) (solid content: 69.5% by mass) | | | | | | | | | | | | | | | | | 5.0 | |
| | | Polymer (B28) (solid content: 66.7% by mass) | | | | | | | | | | | | | | | | | | 5.0 |
| | | Red iron oxide | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (K) | Xylene | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| | Subtotal of base part (part by mass) | | 75.0 | 75.0 | 80.0 | 90.0 | 75.0 | 75.0 | 75.0 | 75.0 | 80.0 | 75.0 | 75.0 | 75.0 | 75.0 | 75.0 | 75.0 | 75.0 | 75.0 | 75.0 |
| | | Phenyl-modified organopolysiloxane | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 |
| | (G) | organosilane partial hydrolyzed condensate | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | (H) | Dibutyltin dilaurate | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | (K) | Acetylacetone | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 |
| | | Xylene | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Subtotal of curing agent part (part by mass) | | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 |
| Addi-tive | (D) | 3-(2-Aminoethylamino)propyltrimethoxysilane | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | (K) | Xylene | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 |
| | Subtotal of additive part (part by mass) | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Total (part by mass) | | | 95.0 | 95.0 | 100.0 | 110.0 | 95.0 | 95.0 | 95.0 | 95.0 | 100.0 | 95.0 | 95.0 | 95.0 | 95.0 | 95.0 | 95.0 | 95.0 | 95.0 | 95.0 |
| Result | Antifouling performance | | 10 | 10 | 10 | 9 | 10 | 10 | 10 | 10 | 10 | 10 | 10 | 10 | 10 | 8 | 8 | 8 | 10 | 10 |
| | Adhesiveness (standard) | | 3 | 3 | 3 | 3 | 3 | 3 | 3 | 3 | 3 | 3 | 3 | 3 | 3 | 3 | 3 | 3 | 3 | 3 |
| | Adhesiveness (overload) | | 3 | 3 | 3 | 3 | 3 | 3 | 3 | 3 | 3 | 3 | 3 | 3 | 3 | 3 | 3 | 3 | 2 | 2 |

* Reference Example (not encompassed by the wording of the claims)

Table 11

| | | | Example | | | | | | | | | | | | | | Comparative Example | | |
|---|---|---|---|---|---|---|---|---|---|---|---|---|---|---|---|---|---|---|---|
| | | | 67 | 68 | 69 | 70 | 71 | 72 | 73 | 74 | 75* | 76* | 77 | 78 | 79 | 80 | 5 | 6 | 7 |
| Formulation of coating composition (part by mass) | (A) | Silanol group-containing organopolysiloxane | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 |
| | (A) and (C) | Kneaded product (1) of silanol group-containing organopolysiloxane and hydrophobic treated silica | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| | (B) | Polymer (B1) (solid content: 69.7% by mass) | | 5.0 | | | | | | | | | | | | | | | |
| | | Polymer (B3) (solid content: 69.5% by mass) | | | 5.0 | | | | | | | | | | | | | | |
| | | Polymer (B4) (solid content: 69.5% by mass) | | | | 5.0 | 10.0 | 20.0 | | | | | | | | | | | |
| | | Polymer (B5) (solid content: 69.2% by mass) | | | | | | | 5.0 | | | | | | | | | | |
| | | Polymer (B8) (solid content: 69.1% by mass) | | | | | | | | 5.0 | | | | | | | | | |
| | | Polymer (B9) (solid content: 69.1% by mass) | | | | | | | | 5.0 | | | | | | | | | |
| | | Polymer (B17) (solid content: 70.3% by mass) | | | | | | | | | 5.0 | | | | | | | | |
| | | Polymer (B18) (solid content: 70.1% by mass) | | | | | | | | | | 5.0 | | | | | | | |
| | | Polymer (B27) (solid content: 69.5% by mass) | | | | | | | | | | | 5.0 | | | | | | |
| | | Polymer (B28) (solid content: 66.7% by mass) | | | | | | | | | | | | 5.0 | | | | | |
| | | Polymer (B30) (solid content: 69.0% by mass) | | | | | | | | | | | | | 5.0 | | | | |
| | | Polymer (B33) (solid content: 69.5% by mass) | 5.0 | 5.0 | | | | | | | | | | | | 5.0 | | | |
| | (F) | Copper pyrithione | | | 5.0 | 5.0 | 5.0 | 5.0 | 5.0 | 5.0 | 5.0 | 5.0 | 5.0 | 5.0 | 5.0 | 5.0 | | 5.0 | 5.0 |
| | | Red iron oxide | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |
| | (K) | Xylene | 10.0 | 10.0 | 15.0 | 15.0 | 15.0 | 15.0 | 15.0 | 15.0 | 15.0 | 15.0 | 15.0 | 15.0 | 15.0 | 15.0 | 10.0 | 15.0 | 15.0 |
| | Subtotal of base part (part by mass) | | 75.0 | 80.0 | 85.0 | 85.0 | 90.0 | 100.0 | 85.0 | 90.0 | 85.0 | 85.0 | 85.0 | 85.0 | 85.0 | 85.0 | 70.0 | 80.0 | 80.0 |
| | | Phenyl-modified organopolysiloxane | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 |
| | (G) | organosilane partial hydrolyzed condensate | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | (H) | Dibutyltin dilaurate | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | (K) | Acetylacetone | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 | 5.4 |
| | | Xylene | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Subtotal of curing agent part (part by mass) | | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 | 19.0 |
| Addi-tive | (D) | 3-(2-Aminoethylamino)propyltrimethoxysilane | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | (K) | Xylene | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 | 0.9 |
| | Subtotal of additive part (part by mass) | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Total (part by mass) | | | 95.0 | 100.0 | 105.0 | 105.0 | 110.0 | 120.0 | 105.0 | 110.0 | 105.0 | 105.0 | 105.0 | 105.0 | 105.0 | 105.0 | 90.0 | 100.0 | 100.0 |
| Result | Antifouling performance * not evaluated due to exfoliation in Comparative Example 7 | | 10 | 10 | 10 | 10 | 10 | 10 | 10 | 10 | 9 | 10 | 10 | 10 | 10 | 10 | 1 | 4 | - |
| | Adhesiveness (standard) | | 3 | 3 | 3 | 3 | 3 | 3 | 3 | 3 | 3 | 3 | 3 | 3 | 3 | 3 | 3 | 3 | 1 |
| | Adhesiveness (overload) | | 3 | 3 | 3 | 3 | 3 | 3 | 3 | 3 | 3 | 3 | 2 | 2 | 2 | 2 | 2 | 3 | 0 |

* Reference Example (not encompassed by the wording of the claims)

Table 12

| | Product name | Compound, manufacturer, etc. | Composition (part by mass) | |
|---|---|---|---|---|
| | | | Underlying coating composition 1 | Underlying coating composition 2 |
| Base part | jER 843-90X | Bisphenol A type epoxy resin, produced by Mitsubishi Chemical Corporation | 18.9 | |
| | Laroflex MP-25 | Vinyl chloride-vinyl isobutyl ether copolymer, produced by Mitsubishi Chemical Corporation | 3 | |
| | TCP | Tricresyl phosphate, produced by Kyowa Hakko Kogyo Co., Ltd. | 3 | |
| | Phthalkyd 806 | Polyester polyol, produced by Hitachi Chemical Co., Ltd. | | 18 |
| | Nisseki Neopolymer E-100 | Petroleum resin, produced by JX Energy Corporation | | 10 |
| | TTK Talc | Talc, produced by Takehara Kagaku Kogyo Co., Ltd. | 30 | 16 |
| | Calcined Gypsum FT-2 | hemihydrate gypsum, produced by Noritake Co., Ltd. | | 6 |
| | Unispar PG-K10 | potassium feldspar, produced by Sibelco Japan, Ltd. | | 6 |
| | Aluminum paste 0638-70C | Toyo Aluminum K.K. | 7 | |
| | Titone R-5N | Sakai Chemical Industry Co., Ltd. | 1.9 | 6 |
| | Mitsubishi Carbon Black MA100 | Mitsubishi Chemical Corporation | 0.1 | 0.1 |
| | Molecular Sieve 4A Powder | Union Showa K.K. | | 1 |
| | Disparlon 6650 | Amide wax, produced by Kusumoto Chemicals, Ltd. | 1.5 | 2 |
| | Neostann U-100 | Dibutyltin dilaurate, produced by Nitto Kasei Co., Ltd. | | 0.1 |
| | 1,2-Dimethylimidazole | - | | 0.1 |
| | Xylene | - | 15.6 | 6.7 |
| | 2-Methoxypropanol | - | 2 | |
| | Methyl isobutyl ketone | - | 2 | 6 |
| | Ethyl acetate | - | | 3 |

(continued)

| | Product name | Compound, manufacturer, etc. | Composition (part by mass) | |
|---|---|---|---|---|
| | | | Underlying coating composition 1 | Underlying coating composition 2 |
| Curing agent part | Luckamide TD966 | Polyamidoamine, produced by DIC Corporation active hydrogen equivalent: 380 g/eq | 10.5 | |
| | TAP | 2,4,6-Tris(dimethylaminomethyl)phenol, produced by Kayaku Akzo Corporation | 0.3 | |
| | Desmodur L-75 | Aromatic polyisocyanate, produced by Sumika Covestro Urethane Co., Ltd. | | 15 |
| | Xylene | - | 4.2 | 1 |
| | Ethyl acetate | - | | 3 |

It is apparent from the results of Examples, Reference Examples and Comparative Examples, an antifouling coating film excellent in antifouling performance and adhesiveness can be formed with the coating composition of the present invention.

## Claims

1. An antifouling coating composition comprising: a curable organopolysiloxane (A); and

   a polymer (B) containing a constituent unit derived from at least one selected from the group consisting of an unsaturated monomer (b1) represented by the following formula (I), a tetrahydrofurfuryl (meth)acrylate (b2), a 4-(meth)acryloylmorpholine (b3), and a vinylpyrrolidone (b4), wherein
   the weight average molecular weight of the polymer (B) is 7,000 to 30,000 measured by gel permeation chromatography as indicated in the description:

$$H_2C{=}CR^1{-}X{-}\left[(R^2O)_m(R^3O)_n\right]{-}R^4 \qquad (I)$$

   wherein $R^1$ represents a hydrogen atom or a monovalent hydrocarbon group having 1 to 10 carbon atoms; $R^2$ represents an ethylene group or a propylene group, and plural groups represented by $R^2$ may be the same as or different from each other; $R^3$ represents a divalent hydrocarbon group having 4 to 10 carbon atoms, and in the case where n represents an integer of 2 or more, plural groups represented by $R^3$ may be the same as or different from each other; $R^4$ represents a hydrogen atom or a monovalent hydrocarbon group having 1 to 30 carbon atoms; m represents an integer of 3 to 15; n represents an integer of 0 to 50; and X represents an ester bond, an amide bond, or a single bond.

2. The antifouling coating composition according to claim 1, wherein the unsaturated monomer (b1) is represented by the following formula (II):

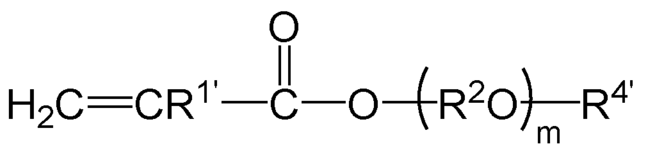

( II )

   wherein $R^{1'}$ represents a hydrogen atom or a methyl group; $R^2$ represents an ethylene group or a propylene group, and plural groups represented by $R^2$ may be the same as or different from each other; m represents an integer of

3 to 15; and $R^{4'}$ represents a hydrogen atom or a methyl group.

**3.** The antifouling coating composition according to claim 1 or 2, wherein the unsaturated monomer (b1) is represented by the following formula (III):

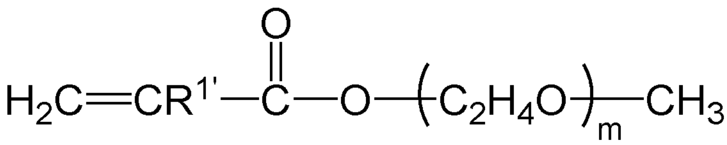

( III )

wherein $R^{1'}$ represents a hydrogen atom or a methyl group; and m represents an integer of 3 to 15.

**4.** The antifouling coating composition according to any one of claims 1 to 3, wherein the polymer (B) contains, not only at least one selected from the group consisting of the unsaturated monomer (b1), the tetrahydrofurfuryl (meth)acrylate (b2), the 4-(meth)acryloylmorpholine (b3), and the vinylpyrrolidone (b4), but also a constituent unit derived from another unsaturated monomer (b5).

**5.** The antifouling coating composition according to claim 4, wherein the other unsaturated monomer (b5) contains an unsaturated monomer (b5) represented by the following formula (IV):

$$H_2C{=}CR^{41}{-}X{-}R^{42} \qquad (IV)$$

wherein $R^{41}$ represents a hydrogen atom or a monovalent hydrocarbon group having 1 to 10 carbon atoms; $R^{42}$ represents a hydrogen atom or a monovalent hydrocarbon group having 1 to 50 carbon atoms; and X represents an ester bond, an amide bond, or a single bond.

**6.** The antifouling coating composition according to any one of claims 1 to 3, wherein the polymer (B) has a content of the constituent unit derived from at least one selected from the group consisting of the unsaturated monomer (b1), the tetrahydrofurfuryl (meth)acrylate (b2), the 4-(meth)acryloylmorpholine (b3), and the vinylpyrrolidone (b4) therein of 1 to 100% by mass.

**7.** The antifouling coating composition according to any one of claims 1 to 6, further comprising a silane coupling agent (D).

**8.** The antifouling coating composition according to any one of claims 1 to 7, further comprising a silicone oil (E).

**9.** The antifouling coating composition according to any one of claims 1 to 8, further comprising an antifouling agent (F).

**10.** An antifouling coating film, which is formed by curing the antifouling coating composition according to any one of claims 1 to 9.

**11.** A laminated antifouling coating film comprising an underlying coating film (u) having thereon the antifouling coating film according to claim 10, the underlying coating film (u) being formed by curing an epoxy curable underlying coating composition or a urethane curable underlying coating composition.

**12.** A substrate with an antifouling coating film, comprising a substrate having thereon the antifouling coating film according to claim 10 or the laminated antifouling coating film according to claim 11.

**13.** A method for producing a substrate with an antifouling coating film, comprising steps (1) and (2), or steps (i) and (ii):

(1) a step of applying the antifouling coating composition according to any one of claims 1 to 9 on a substrate or impregnating a substrate with the antifouling coating composition according to any one of claims 1 to 9, so as to provide a applied member or an impregnated member;
(2) a step of curing the applied member or the impregnated member;

(i) a step of forming a coating film formed by curing the antifouling coating composition according to any one of claims 1 to 9; and
(ii) a step of attaching the coating film to a substrate.

**14.** The antifouling coating composition according to any one of claims 1 to 9, wherein the curable organopolysiloxane (A) is represented by the following formula (A1):

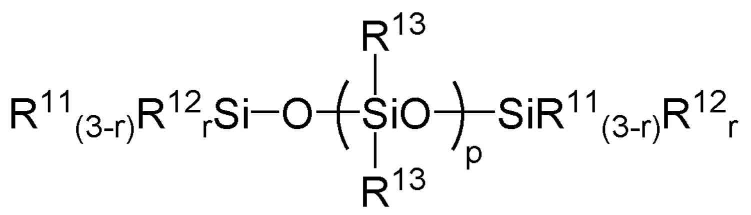

( A1 )

wherein $R^{11}$ and $R^{13}$ each independently represent a hydrogen atom, an alkyl group, an alkenyl group, an aryl group, an aralkyl group, or a halogenated alkyl group, each having 1 to 16 carbon atoms; $R^{12}$ each independently represent a hydroxy group or a hydrolyzable group; r represents an integer of 1 to 3; and p represents 10 to 10,000.

**15.** An antifouling method comprising using the antifouling coating film according to claim 10 or the laminated antifouling coating film according to claim 11.

**Patentansprüche**

**1.** Antifouling-Beschichtungszusammensetzung, umfassend: ein härtbares Organopolysiloxan (A) und

ein Polymer (B), das eine von mindestens einem, ausgewählt aus der Gruppe, bestehend aus einem durch die folgende Formel (I) dargestellten ungesättigten Monomer (b1), einem Tetrahydrofurfuryl(meth)acrylat (b2), einem 4-(Meth)acryloylmorpholin (b2) und einem Vinylpyrrolidon (b4), abgeleitete konstitutionelle Einheit enthält, wobei
das gewichtsgemittelte Molekulargewicht des Polymers (B) 7.000 bis 30.000, gemessen durch Gelpermeationschromatographie wie in der Beschreibung angegeben, beträgt:

$$H_2C{=}CR^1{-}X{-}\left[(R^2O)_m(R^3O)_n\right]{-}R^4 \qquad (\mathrm{I})$$

worin $R^1$ ein Wasserstoffatom oder eine einwertige Kohlenwasserstoffgruppe mit 1 bis 10 Kohlenstoffatomen darstellt, $R^2$ eine Ethylengruppe oder eine Propylengruppe darstellt und mehrere durch $R^2$ dargestellte Gruppen gleich oder verschieden voneinander sein können, $R^3$ eine zweiwertige Kohlenwasserstoffgruppe mit 4 bis 10 Kohlenstoffatomen darstellt und für den Fall, dass n eine ganze Zahl von 2 oder größer ist, mehrere durch $R^3$ dargestellte Gruppen gleich oder verschieden voneinander sein können, $R^4$ ein Wasserstoffatom oder eine einwertige Kohlenwasserstoffgruppe mit 1 bis 30 Kohlenstoffatomen darstellt, m eine ganze Zahl von 3 bis 15 darstellt, n eine ganze Zahl von 0 bis 50 darstellt und X eine Esterbindung, eine Amidbindung oder eine Einfachbindung darstellt.

**2.** Antifouling-Beschichtungszusammensetzung gemäß Anspruch 1, wobei das ungesättigte Monomer (b1) durch die folgende Formel (II) dargestellt ist:

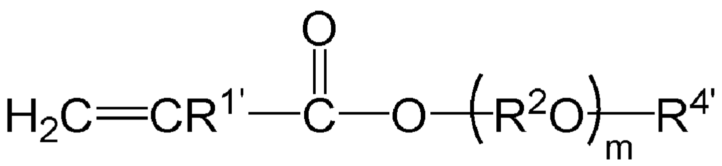

( II )

worin $R^{1'}$ ein Wasserstoffatom oder eine Methylgruppe darstellt, $R^2$ eine Ethylengruppe oder eine Propylengruppe darstellt und mehrere durch $R^2$ dargestellte Gruppen gleich oder verschieden voneinander sein können, m eine ganze Zahl von 3 bis 15 darstellt und $R^{4'}$ ein Wasserstoffatom oder eine Methylgruppe darstellt.

**3.** Antifouling-Beschichtungszusammensetzung gemäß Anspruch 1 oder 2, wobei das ungesättigte Monomer (b1) durch die folgende Formel (II) dargestellt ist:

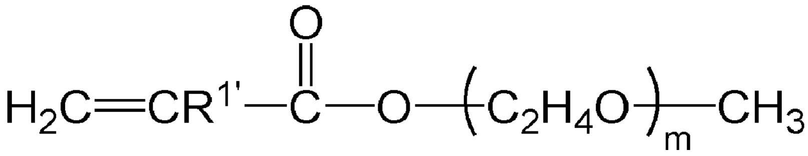

( III )

worin $R^{1'}$ ein Wasserstoffatom oder eine Methylgruppe darstellt und m eine ganze Zahl von 3 bis 15 darstellt.

**4.** Antifouling-Beschichtungszusammensetzung gemäß einem der Ansprüche 1 bis 3, wobei das Polymer (B) nicht nur mindestens eines, ausgewählt aus der Gruppe, bestehend aus dem ungesättigten Monomer (b1), dem Tetrahydrofurfuryl(meth)acrylat (b2), dem 4-(Meth)acryloylmorpholin (b3) und dem Vinylpyrrolidon (b4), sondern auch eine von einem weiteren ungesättigten Monomer (b5) abgeleitete konstitutionelle Einheit enthält.

**5.** Antifouling-Beschichtungszusammensetzung gemäß Anspruch 4, wobei das weitere ungesättigte Monomer (b5) ein durch die folgende Formel (IV) dargestelltes ungesättigtes Monomer (b5) enthält:

$$H_2C{=}CR^{41}{-}X{-}R^{42} \qquad (IV)$$

worin $R^{41}$ ein Wasserstoffatom oder eine einwertige Kohlenwasserstoffgruppe mit 1 bis 10 Kohlenstoffatomen darstellt, $R^{42}$ ein Wasserstoffatom oder eine einwertige Kohlenwasserstoffgruppe mit 1 bis 50 Kohlenstoffatomen darstellt und X eine Esterbindung, eine Amidbindung oder eine Einfachbindung darstellt.

**6.** Antifouling-Beschichtungszusammensetzung gemäß einem der Ansprüche 1 bis 3, wobei das Polymer (B) einen Gehalt der von mindestens einem, ausgewählt aus der Gruppe, bestehend aus dem ungesättigten Monomer (b1), dem Tetrahydrofurfuryl(meth)acrylat (b2), dem 4-(Meth)acryloylmorpholin (b3) und dem Vinylpyrrolidon (b4), abgeleiteten konstitutionellen Einheit darin von 1 bis 100 Masse-% aufweist.

**7.** Antifouling-Beschichtungszusammensetzung gemäß einem der Ansprüche 1 bis 6, ferner umfassend einen Silanhaftvermittler (D).

**8.** Antifouling-Beschichtungszusammensetzung gemäß einem der Ansprüche 1 bis 7, ferner umfassend ein Silikonöl (E).

**9.** Antifouling-Beschichtungszusammensetzung gemäß einem der Ansprüche 1 bis 8, ferner umfassend ein Antifoulingmittel (F).

**10.** Antifouling-Beschichtungsfilm, der durch Härten der Antifouling-Beschichtungszusammensetzung gemäß einem der Ansprüche 1 bis 9 gebildet ist.

**11.** Laminierter Antifouling-Beschichtungsfilm, umfassend einen unteren Film (u), der darauf den Antifouling-Beschichtungsfilm gemäß Anspruch 10 aufweist, wobei der untere Beschichtungsfilm (u) durch Härten einer härtbaren unteren Epoxidbeschichtungszusammensetzung oder einer härtbaren unteren Urethanbeschichtungszusammensetzung gebildet wird.

**12.** Substrat mit einem Antifouling-Beschichtungsfilm, umfassend ein Substrat, das darauf den Antifouling-Beschichtungsfilm gemäß Anspruch 10 oder den laminierten Antifouling-Beschichtungsfilm gemäß Anspruch 11 aufweist.

**13.** Verfahren zur Herstellung eines Substrats mit einem Antifouling-Beschichtungsfilm, umfassend die Schritte (1) oder (2) oder die Schritte (i) und (ii):

(1) einen Schritt zum Beschichten der Antifouling-Beschichtungszusammensetzung gemäß einem der Ansprüche 1 bis 9 auf ein Substrat oder Imprägnieren eines Substrats mit einer Antifouling-Beschichtungszusammensetzung gemäß einem der Ansprüche 1 bis 9, so dass ein beschichtetes Element oder ein imprägniertes Element bereitgestellt wird,
(2) einen Schritt zum Härten des beschichteten Elements oder des imprägnierten Elements,

(i) einen Schritt zum Bilden eines Beschichtungsfilms, der durch Härten der Antifouling-Beschichtungszusammensetzung gemäß einem der Ansprüche 1 bis 9 gebildet wird, und
(ii) einen Schritt zum Befestigen des Beschichtungsfilms an einem Substrat.

**14.** Antifouling-Beschichtungszusammensetzung gemäß einem der Ansprüche 1 bis 9, wobei das härtbare Organopolysiloxan (A) durch die folgende Formel (A1) dargestellt ist:

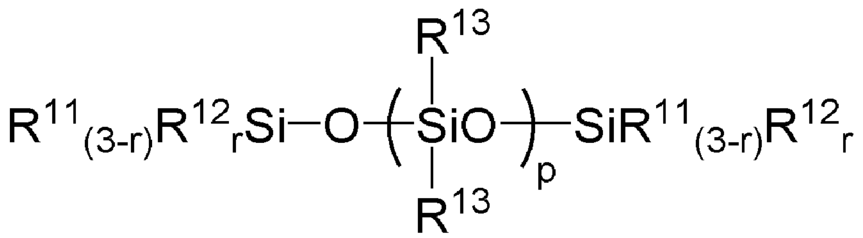

(A1)

worin $R^{11}$ und $R^{13}$ jeweils unabhängig ein Wasserstoffatom, eine Alkylgruppe, eine Alkenylgruppe, eine Arylgruppe, eine Aralkylgruppe oder eine halogenierte Alkylgruppe mit jeweils 1 bis 16 Kohlenstoffatomen darstellen, $R^{12}$ jeweils unabhängig eine Hydroxygruppe oder eine hydrolysierbare Gruppe darstellt, r eine ganze Zahl von 1 bis 3 darstellt und p 10 bis 10.000 darstellt.

**15.** Antifoulingverfahren, umfassend die Verwendung des Antifouling-Beschichtungsfilms gemäß Anspruch 10 oder des laminierten Antifouling-Beschichtungsfilms gemäß Anspruch 11.

**Revendications**

**1.** Composition de revêtement antisalissure comprenant : un organopolysiloxane durcissable (A) ; et

un polymère (B) contenant une unité constitutive dérivée d'au moins un choisi dans le groupe constitué d'un monomère insaturé (b1) représenté par la formule (I) suivante, d'un (méth)acrylate de tétrahydrofurfuryle (b2), d'une 4-(méth)acryloylmorpholine (b3), et d'une vinylpyrrolidone (b4), dans laquelle
la masse moléculaire moyenne en poids du polymère (B) est de 7 000 à 30 000 mesurée par chromatographie par perméation sur gel comme indiqué dans la description :

$$H_2C{=}CR^1{-}X{-}\left[(R^2O)_m(R^3O)_n\right]{-}R^4 \qquad (I)$$

dans laquelle $R^1$ représente un atome d'hydrogène ou un groupe hydrocarbure monovalent ayant 1 à 10 atomes de carbone ; $R^2$ représente un groupe éthylène ou un groupe propylène, et plusieurs groupes représentés par $R^2$ peuvent être identiques ou différents les uns des autres ; $R^3$ représente un groupe hydrocarbure divalent ayant 4 à 10 atomes de carbone, et dans le cas où n représente un nombre entier de 2 ou plus, plusieurs groupes représentés par $R^3$ peuvent être identiques ou différents les uns des autres ; $R^4$ représente un atome d'hydrogène ou un groupe hydrocarbure monovalent ayant 1 à 30 atomes de carbone ; m représente un nombre entier de 3 à 15 ; n représente un nombre entier de 0 à 50 ; et X représente une liaison ester, une liaison amide, ou une liaison simple.

**2.** Composition de revêtement antisalissure selon la revendication 1, dans laquelle le monomère insaturé (b1) est représenté par la formule (II) suivante :

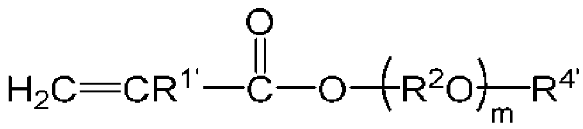

( II )

dans laquelle $R^{1'}$ représente un atome d'hydrogène ou un groupe méthyle ; $R^2$ représente un groupe éthylène ou un groupe propylène, et plusieurs groupes représentés par $R^2$ peuvent être identiques ou différents les uns des autres ; m représente un nombre entier de 3 à 15 ; et $R^{4'}$ représente un atome d'hydrogène ou un groupe méthyle.

3. Composition de revêtement antisalissure selon la revendication 1 ou la revendication 2, dans laquelle le monomère insaturé (b1) est représenté par la formule (III) suivante :

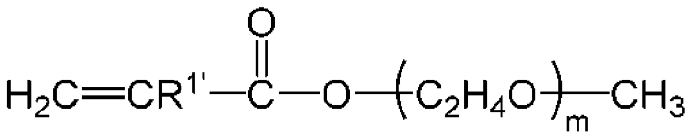

( III )

dans laquelle $R^{1'}$ représente un atome d'hydrogène ou un groupe méthyle ; et m représente un nombre entier de 3 à 15.

4. Composition de revêtement antisalissure selon l'une quelconque des revendications 1 à 3, dans laquelle le polymère (B) contient non seulement au moins un choisi dans le groupe constitué du monomère insaturé (b1), du (méth)acrylate de tétrahydrofurfuryle (b2), de la 4-(méth)acryloylmorpholine (b3), et de la vinylpyrrolidone (b4), mais également une unité constitutive dérivée d'un autre monomère insaturé (b5).

5. Composition de revêtement antisalissure selon la revendication 4, dans laquelle l'autre monomère insaturé (b5) contient un monomère insaturé (b5) représenté par la formule (IV) suivante :

$$H_2C{=}CR^{41}{-}X{-}R^{42} \qquad (IV)$$

dans laquelle $R^{41}$ représente un atome d'hydrogène ou un groupe hydrocarbure monovalent ayant 1 à 10 atomes de carbone ; $R^{42}$ représente un atome d'hydrogène ou un groupe hydrocarbure monovalent ayant 1 à 50 atomes de carbone ; et X représente une liaison ester, une liaison amide, ou une liaison simple.

6. Composition de revêtement antisalissure selon l'une quelconque des revendications 1 à 3, dans laquelle le polymère (B) a une teneur en l'unité constitutive dérivée d'au moins un choisi dans le groupe constitué du monomère insaturé (b1), du (méth)acrylate de tétrahydrofurfuryle (b2), de la 4-(méth)acryloylmorpholine (b3 ), et la vinylpyrrolidone (b4) qu'il contient de 1 à 100 % en masse.

7. Composition de revêtement antisalissure selon l'une quelconque des revendications 1 à 6, comprenant en outre un agent de couplage au silane (D).

8. Composition de revêtement antisalissure selon l'une quelconque des revendications 1 à 7, comprenant en outre une huile de silicone (E).

9. Composition de revêtement antisalissure selon l'une quelconque des revendications 1 à 8, comprenant en outre un agent antisalissure (F).

10. Film de revêtement antisalissure, qui est formé en durcissant la composition de revêtement antisalissure selon l'une quelconque des revendications 1 à 9.

11. Film de revêtement antisalissure stratifié comprenant un film de revêtement sous-jacent (u) ayant sur lui le film de revêtement antisalissure selon la revendication 10, le film de revêtement sous-jacent (u) étant formé par durcissement d'une composition époxy de revêtement sous-jacent durcissable ou d'une composition uréthane de revêtement sous-jacent durcissable.

**12.** Substrat avec un film de revêtement antisalissure, comprenant un substrat sur lequel se trouve le film de revêtement antisalissure selon la revendication 10 ou le film de revêtement antisalissure stratifié selon la revendication 11.

**13.** Procédé de production d'un substrat avec un film de revêtement antisalissure, comprenant les étapes (1) et (2), ou les étapes (i) et (ii) :

(1) une étape d'application de la composition de revêtement antisalissure selon l'une quelconque des revendications 1 à 9 sur un substrat ou d'imprégnation d'un substrat avec la composition de revêtement antisalissure selon l'une quelconque des revendications 1 à 9, de manière à fournir un élément appliqué ou un élément imprégné ;
(2) une étape de durcissement de l'élément appliqué ou de l'élément imprégné ;

(i) une étape de formation d'un film de revêtement formé par durcissement de la composition de revêtement antisalissure selon l'une quelconque des revendications 1 à 9; et
(ii) une étape de fixation du film de revêtement sur un substrat.

**14.** Composition de revêtement antisalissure selon l'une quelconque des revendications 1 à 9, dans laquelle l'organopolysiloxane durcissable (A) est représenté par la formule (A1) suivante :

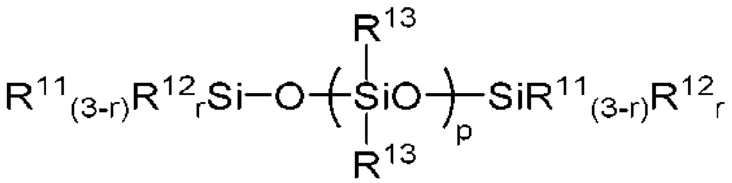

( A1 )

dans laquelle $R^{11}$ et $R^{13}$ représentent chacun indépendamment un atome d'hydrogène, un groupe alkyle, un groupe alcényle, un groupe aryle, un groupe aralkyle ou un groupe alkyle halogéné, ayant chacun 1 à 16 atomes de carbone ; $R^{12}$ représentent chacun indépendamment un groupe hydroxy ou un groupe hydrolysable ; r représente un nombre entier de 1 à 3 ; et p représente 10 à 10 000.

**15.** Procédé antisalissure comprenant l'utilisation du film de revêtement antisalissure selon la revendication 10 ou du film de revêtement antisalissure stratifié selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013515122 T
- JP H01252677 A
- JP H01306479 A
- JP 2001139816 A
- JP 2004182908 A
- JP 4106156 A
- JP 2013129724 A